# EUROPÄISCHE PATENTSCHRIFT

(11) **EP 0 451 303 B1**
(45) Veröffentlichungstag und Bekanntmachung des Hinweises auf die Patenterteilung: **01.09.1993**
(21) Anmeldenummer: 90106693.6
(22) Anmeldetag: 06.04.1990
(51) Int. Cl.: B23K 26/00

(54) **Verfahren zum Aneinanderschweissen von unterschiedlich dicken oder gleich dicken Blechbahnen - auch von dünnen Blechen - durch Laserstrahlschweissen, im Durchlaufverfahren**
Continuous laser welding method for welding metal strips having the same or different thickness - also for thin sheets
Méthode d'assemblage en continu par soudage laser de bandes de tôles d'épaisseur différent ou identique - également de tôles minces

(43) Veröffentlichungstag der Anmeldung: 16.10.1991
(73) Patentinhaber: THYSSEN INDUSTRIE AG MASCHINENBAU, 58453 Witten (DE)
(72) Erfinder: Kurt, Jäck, D-7960 Aulendorf (DE)
(74) Vertreter: Beyer, Rudi

(56) Entgegenhaltungen:
- EP-A- 0 151 848
- EP-A- 0 302 954
- EP-A- 0 326 994
- US-A- 4 854 493

## Beschreibung

Die Erfindung betrifft ein Verfahren zum Aneinanderschweißen von unterschiedlich dicken oder gleich dicken Stahlblechen in der Größenordnung von 0,18 mm bis 8 mm durch Laserschweißen im Durchlaufverfahren.

Des weiteren betrifft die Erfindung eine Vorrichtung zum Durchführen des erfindungsgemäßen Verfahrens.

Durch die EP-OS 0 151 848 ist eine Einrichtung zum mechanischen Beschneiden der Enden von Blechbahnen vorbekannt, die anschließend durch eine Laserstrahlschweißvorrichtung miteinander verschweißt werden.

Bei dem vorbekannten Abbrennstumpfschweißverfahren werden die aneinander angrenzenden Enden des vorlaufenden und des nachlaufenden Coils (Blechband) stumpf gegeneinander gefahren und durch Widerstandsschweißung miteinander verbunden.

Vorbekannt ist auch das sogenannte Rollnahtschweißverfahren. Dabei werden die aneinander angrenzenden Blechenden des vor- und nachlaufenden Coils durch Rollschweißelektronen miteinander verschweißt.

Es gibt auch das sogenannte Clinchen, wobei die beiden Coilenden durch Prägen miteinander verbunden werden, was zu erheblichen Schweißnahtüberhöhungen führt, die ein Walzkaliber bei unaufmerksamen Walzen solcher Stahlbleche erheblich beschädigen können.

Vorbekannt sind auch Plasma-Schweißverfahren. Hierbei kommt es allerdings zu Nahtüberhöhungen. Ungünstig ist auch die höhere Wärmeeinbringung in die Schweißnaht infolge der breiteren Wärmeeinflußzonen. Dadurch kommt es zur Aufhärtung der Schweißnahtbereiche mit schlechter Verformungsgüte.

Bei all diesen Verfahren kommt es zu Nahtüberhöhungen, so daß auch das aufzuwickelnde Coil (vorlaufende Coil) nicht rund sein kann. Bei dünnen Blechen drücken sich die Nahtüberhöhungen im Coil durch. Außerdem kann es zu Beschädigungen der Walzkaliber kommen.

Durch die EP-OS 0 151 848 ist eine Einrichtung zum Stumpfschweißen von Stahlbändern mittels eines Laserstrahls vorbekannt. Dabei werden die aneinander angrenzenden Blechränder mechanisch beschnitten und durch den Laserstrahl anschließend miteinander verschweißt. Der Aufwand ist bei dieser Vorrichtung relativ hoch.

Problematisch kann das Beschneiden und Schweißen von Blechbahnen, insbesondere von auf Wickeln aufzuhaspelnden Blechbahnen - sogenannte "Coil" - werden, wenn z. B. sehr dünne Bleche so bearbeitet werden sollen, oder aber, wenn die Blechdicke, die mittels derartigen Verfahrensweisen zu beschneiden und durch Laserstrahl zu schweißen ist, über einen relativ weiten Dickenbereich variiert. Besonders bei dünnen Blechen ergeben sich dann Probleme, weil auf dünnen Blechen quer zu ihrer Durchlaufrichtung nur relativ geringe Führungskräfte aufgebracht werden können, weil sonst die Blechbahnen ausknicken.

Das saubere Aneinanderschweißen von vor- und nachlaufenden Bahnenden ist z. B. dann erforderlich, wenn von einem Abwickelhaspel Bahnmaterial auf einem anderen Haspel aufgewickelt wird, der wesentlich mehr Bahnmaterial speichern kann als der Abwickelhaspel. Dann ist es erforderlich, das jeweils nachlaufende Ende eines neuen Abwickelhaspels jeweils an das vorlaufende Ende eines Haspels anzuschweißen, was z. B. nach den Qualitätsanforderungen der Kfz-Industrie geschehen muß, wenn derartige Bleche für die Herstellung von Kfz-Karosserien verwendet werden sollen. Solchermaßen hergestellte Laserstrahlschweißnähte müssen auch verformbar, insbesondere tiefziehfähig, sein und demgemäß mit hoher Präzision und ständig gleichbleibender Qualität hergestellt werden können.

Es sind auch Vorrichtungen vorbekannt, bei denen beim Abwickeln von Bahnmaterial von einem Abwickelhaspel das abgewickelte Bahnmaterial einer Qualitätskontrolle unterworfen wird. Wird hierbei ein Abschnitt mit nicht ausreichender Qualität festgestellt, so muß das entsprechende Material entfernt werden, was bedeutet, daß die Coilbahn an dieser Stelle unterbrochen und anschließend das vor- und nacheilende Coilende wieder aneinandergeschweißt werden müssen. Auch in diesen Fällen muß das Aneinanderschweißen der Gutbahnenden, d. h. solcher Bahnen, die den festgelegten Qualitätsgrenzen entsprechen, mit den vorgegebenen Qualitäten und Toleranzen geschehen.

Auch werden heutzutage in der Kfz-Industrie beschichtete, z. B. beiderseitig verzinkte Bleche verwendet, die ebenfalls in derartigen Laserstrahlschweißvorrichtungen problemlos verarbeitet werden müssen.

Aus der US-A-4 854 493 ist ein Verfahren und eine Einrichtung vorbekannt, mit einem vor- und einem nachlaufenden Coil, wobei durch das vorlaufende Coil das Bandmaterial des jeweils nachlaufenden Coils aufgewickelt wird, mit einer Laserstrahlschweißvorrichtung zum Verbinden der jeweiligen Blechbahnenden des vor- und des nachlaufenden Coils, wobei sowohl dem nachlaufenden als auch dem vorlaufenden Randstreifen Spannbacken zugeordnet sind, die motorisch in Klemmstellung und in Offenstellung beweglich sind, wobei die Klemmbacken die Randstreifen zwischen sich festklemmen, derart, daß randseitig freie Endabschnitte zwischen den Klemmbacken herausragen; und wobei eine Laserstrahlschweißvorrichtung motorisch orthogonal zur Banddurchlaufrichtung mindestens über die Bahnbreite motorisch verstellbar angeordnet ist, die einerseits die beiden aus den Klemmackenpaaren herausragenden Blechstreifen zwecks Nahtvorbereitung abtrennt und zum anderen die anschließend stumpf gegeneinander gebrachten Blechbahnenden miteinander verschweißt.

Dieser Stand der Technik eignet sich für sehr dünne Bleche, da die Blechstreifen magnetisch festgehalten werden sollen. Ebenfalls ist nicht zu erkennen, daß dieses Verfahren auch zum Laserstrahlschweißen von kaltgewalzten Feinblechbändern, die feuerverzinkt, elektrolytisch verzinkt oder sonstwie beschichtet sind, geeignet wäre. Insbesondere ist nicht zu erkennen, daß dieses Verfahren sich zum Verbinden von Blechen eignet, wie sie üblicherweise im Kfz-Karosseriebau zur Anwendung gelangen sollen. Außerdem ist die Entsorgung der Einrichtung von den abgeschnittenen Randstreifen schwierig.

Der Erfindung liegt die Aufgabe zugrunde, bei einem Verfahren der gattungsgemäß vorausgesetzten Art zunächst sicherzustellen, daß über die in Betracht kommenden Dikken- und Breitenabmessungen der zu verarbeitenden Blechbahnen (Coil) nach ihrem endseitigen Beschneiden durch die Laserstrahlschweißvorrichtung die Blechbahnen durch Stumpfschweißen genau zentrisch und ohne Verwerfungen und seitliche Überstände miteinander verschweißt werden können.

Des weiteren liegt der Erfindung die Aufgabe zugrunde, eine geeignete Vorrichtung zum Durchführen des erfindungsgemäßen Verfahrens zu schaffen.

### Lösung der Aufgabe betreffend das Verfahren

Diese Aufgabe wird durch die in **Patentanspruch 1** wiedergegebenen Merkmale gelöst.

Bei dem erfindungsgemäßen Verfahren ist es möglich, die Bahnenden z. B. relativ zueinander und z. B. in Durchlaufrichtung und/oder entgegengesetzt dazu relativ zueinander zu bewegen.

Des weiteren ist es bei dem erfindungsgemäßen Verfahren aber auch z. B. möglich, die Bahnenden relativ zueinander in mindestens einer weiteren Ebene, z. B. quer zur Durchlaufrichtung, zu bewegen.

Auf diese Weise ist eine vielfältige Steuerung der Bahnenden zueinander gegeben, so daß sich diese nach ihrem endrandseitigen Beschneiden durch die Laserstrahlschweißvorrichtung so genau zueinander justieren lassen, daß beim anschließenden Laserstrahlverschweißen nicht nur ein Überstand von Blechen zu der einen oder anderen Seitenbegrenzung, sondern auch orthogonal dazu ausgeschlossen ist. Auf diese Weise lassen sich z. B. Coilbahnenden von Blechen, die im Karosseriebau für die Kfz-Industrie benötigt werden, so genau mit stets gleichbleibenden Qualitätsanforderungen miteinander laserstrahlverschweißen, daß diese Bleche ohne Nachbearbeitung auch einem anschließenden Umformungsverfahren, z. B. einem Tiefziehprozeß, unterworfen werden können.

Die Steuerung der Bahnenden gemäß der Erfindung ermöglicht es auch, bei sehr dünnen Blechen, von z. B. 0,18 mm, ohne daß seitliche Kräfte auf die Bahnenden ausgeübt werden, die Bahnenden relativ zueinander so zu steuern, daß sie anschließend fluchtgenau durch Laserstrahlschweißen miteinander verbunden werden können.

Ein erfindungsgemäßes Verfahren eignet sich deshalb besonders auch zum Verbinden von Bahnenden über einen großen Dickenbereich. Bei dem erfindungsgemäßen Verfahren können Bleche in der Größenordnung von 0,18 mm bis 3,2 mm bis 8 mm, sowohl durch Laserstrahlschweißen endrandseitig beschnitten, als auch anschließend durch Laserstrahlschweißen miteinander verbunden werden. Beim Banddurchlauf können von unten Rollen zugesteuert werden, damit das Band in einem Abstand von ca. 50 mm vom unteren Spannbacken entfernt kontinuierlich durchläuft.

Durch das erfindungsgemäße Verfahren wird die eine Blechbahn nach ihrem endrandseitigen Beschneiden durch die Laserstrahlschweißvorrichtung fixiert und dann nicht mehr bewegt, während die andere Blechbahn nach ihrem endrandseitigen Beschneiden durch die Laserstrahlschweißvorrichtung so gesteuert wird, daß sowohl ein Fügehub, also eine Zustellbewegung im Hinblick auf eine Stumpfnaht auf das fixierte, andere Bahnende, als ggf. auch mindestens eine weitere Bewegung quer dazu oder in eine andere Bewegungsrichtung erfolgt, bis beide Bahnenden in hirer angestrebten, genauen Zuordnung zueinander gebracht sind. Danach wird auch die zweite, bewegliche Blechbahn fixiert, woraufhin das Verbinden der beiden Blechbahnen durch Laserstrahlschweißen erfolgt.

Die Vorgehensweise hat den Vorteil, daß die ein Blechbahn nach ihrem endrandseitigen Beschneiden durch die Laserstrahlschweißvorrichtung nicht mehr bewegt wird und sich der Fügehub und etwaige Steuerbewegungen nur auf die andere Blechbahn beschränken.

Das vorlaufende Bahnende wird zunächst nach seinem endrandseitigen Beschneiden fixierte, während das nachlaufende Bahnende den Fügehub und etwaige Zustellbewegungen durchführt, um die beiden Blechbahnenden in die angestrebte Schweißlage zu bringen - **Patentanspruch 2**.

In **Patentanspruch 3** ist eine weitere vorteilhafte Verfahrensweise beschrieben.

Die Verfahrensweise nach **Patentanspruch 4** ermöglicht es, daß das eine Bahnende nach seinem randseitigen Beschneiden fixiert wird, während das andere Bahnende nicht nur einen Zustellhub auf das fixierte Bahnende auszuführen vermag, sondern auch in gewissem Winkelbereich schwenkbeweglich in bezug auf das fixierte Bahnende ist. Auf diese Weise können z. B. die Bahnenden relativ zueinander nicht nur einen Zustellhub ausführen, sondern auch quer beweglich zur Durchlaufrichtung und - relativ zueinander - auch winkelgesteuert werden. Dadurch sind sehr feinfühlige Anpassungen der Bahnenden zueinander gegeben, so daß die Bahnenden mit hoher Präzision in die angestrebte Flucht- bzw. Paßlage gesteuert und anschließend durch Laserstrahlschweißverfahren miteinander verbunden werden können.

**Patentanspruch 5** beschreibt eine weitere erfinderische und sehr vorteilhafte Verfahrensweise.

Bei der Verfahrensweise gemäß **Patentanspruch 6** werden die beiden Bahnenden durch Klemmen fixiert, wobei z. B. das vorlaufende Bahnende entgegengesetzt zur Durchlaufrichtung und das nachlaufende Bahnende in Durchlaufrichtung einen Fügehub ausführen, bis die einander zugekehrten Stirnseiten der Bahnenden die für das Laserstrahlschweißverfahren erforderliche Lage zueinander aufweisen, in der sie im Stumpfschweißverfahren miteinander verbunden werden. Die Laserstrahlschweißvorrichtung kann bei dieser Verfahrensweise auf die Mittellinie der Schweißnaht gesteuert werden.

Bei der Verfahrensweise nach **Patentanspruch 7** bewegt sich der Laser auf einer festen Bahn z. B. quer zur Durchlaufrichtung der Bahnenden. Die Bahnenden der Coil werden über Stellmotoren im Sinne eines Fügehubes gegeneinander gefahren und anschließend miteinander verschweißt.

Die Verfahrensweise nach **Patentanspruch** **8** unterscheidet sich von den vorbeschriebenen dadurch, daß eine Spaltmessung zwischen den miteinander zu verschweißenden Bahnenden vorgenommen wird. Über Stellmotoren werden die erforderlichen Korrekturen der miteinander zu verschweißenden Coilbahnenden entsprechend dieser Messungen vorgenommen. Die Spaltmessung kann z. B. durch eine Kamera oder jedes andere geeignete Spaltmeßverfahren, durchgeführt werden.

In den **Patentansprüchen 9** bis **11** sind sehr vorteilhafte Verfahrensweisen beschrieben. In diesen Patentansprüchen wird verfahrensmäßig erläutert, wie z. B. von einem Abhaspel Bandmaterial auf ein Gutblechhaspel aufzuhaspeln ist. Wird bei der Qualitätskontrolle ein Bereich minderwertiger Qualität festgestellt, so bietet die erfindungsgemäße Verfahrensweise die Möglichkeit, diesen schlechten Bahnbereich auf ein Schlechtblechhaspel - sogenanntes Inspektionshaspel - auszuschleusen, wobei natürlich dieses Material von dem guten Material durch die Laserstrahlschweißvorrichtung abgetrennt werden muß. Die Bahnenden der Gutbahnbereiche werden anschließend durch die Laserstrahlschweißvorrichtung wieder in der in den Patentansprüchen beschriebenen Ast und Weise miteinander durch Laserstrahlschweißen verbunden.

Außerdem bietet die erfindungsgemäße Verfahrensweise die Möglichkeit, auch beim Vorsehen eines sogenannten Inspektionshaspels nach dem Erschöpfen des Abhaspels dort einen Haspel mit Neumaterial zu installieren, dessen Bahnende dann an das vorlaufende Coilende durch Laserstrahlschweißen innerhalb der vorgegebenen Toleranzbereiche sehr genau angeschweißt werden kann.

In all' den genannten Fällen ermöglicht die Erfindung es, so enge Toleranzen einzuhalten, daß die hergestellten Laserstrahlschweißnähte ohne weitere Bearbeitung, z. B. an Karosserieblechen, verbleiben und nachfolgend bearbeitet, z. B. tiefgezogen, werden können. Es ist nicht mehr erforderlich zu bestimmen, wo sich der Nahtbereich befindet, da die Erfindung so hohe Qualitäten bei der Herstellung von Laserschweißnähten ermöglicht, daß diese gegenüber dem Grundmaterial keine schlechteren Qualitätseigenschaften - auch im Hinblick auf ein Tiefziehverfahren oder dergleichen - aufweisen.

### Lösung der Aufgabe betreffend die Vorrichtung

Diese Aufgabe wird durch die in **Patentanspruch 12** wiedergegebenen Merkmale gelöst.

Durch die Vorrichtung lassen sich auch sehr dünne Bleche von 0,18 mm bis etwa 8 mm sehr schnell verarbeiten. Insbesondere eignet sich das erfindungsgemäße Verfahren auch für solche Fälle, bei denen von einem Abhaspel auf ein Gutblechhaspel Blechband aufgewickelt wird, während die den Qualitätsanforderungen nicht entsprechenden Blechabschnitte auf ein sogenanntes Inspektionshaspel (Schlechtblechhaspel) aufgewickelt werden können. Das Ausschleusen des Schlechtbandes kann sehr rasch, sozusagen im fliegenden Wechsel, geschehen, so daß der Zeitaufwand zum Abschneiden und Wiederanschweißen von Blechenden relativ gering ist.

Die Vorrichtung eignet sich insbesondere zum Bearbeiten von Blechcoil, deren Bleche z. B. für den Karosseriebau verwendet werden.

Mit einer erfindungsgemäßen Vorrichtung lassen sich die Blechenden durch einen Laserstrahl nicht nur abschneiden, sondern mit der gleichen Laserstrahlschweißvorrichtung auch wieder aneinanderschweißen, und zwar mit stets gleichbleibender, hoher Qualität, wobei insbesondere ein genaues Zentrieren der aneinander zu schweißenden Coilblechenden erfolgt.

In den **Patentansprüchen 13** bis **20** sind weitere, sehr vorteilhafte Ausführungsformen der Erfindung beschrieben.

Bei der Ausführungsform gemäß z. B. **Patentanspruch 13** erfolgt ein sicheres Unterstützen des abzuschneidenden Randbereiches und eine Abfallbeseitigung (abgeschnittener Randstreifen) beim automatischen Durchlauf der Coil.

Gemäß **Patentansprüche 14** und **15** wird eine Saubere Schweißnaht auch nach dem Ausrichten sehr dünner Bleche von z. B. 0,18 mm sichergestellt.

In **Patentanspruch 16** ist eine bevorzugte Ausführungsform erläutert.

Gemäß **Patentanspruch 17** wird die Laserschweißnaht beidseitig gebürstet.

In **Patentanspruch 18** ist eine Seitenführung beschrieben, die sich auch für sehr dünne Bleche von z. B. 0,18 mm eignet.

**Patentanspruch 19** beschreibt eine vorteilhafte Ausführungsform.

Bei der Ausführungsform nach **Patentanspruch 20** wird sichergestellt, daß sich auch unterschiedliche Blechdicken nicht nachteilig auf die Schweißnahtbildung auswirken.

In der Zeichnung ist die Erfindung - teils schematisch - an Ausführungsbeispielen veranschaulicht. Es zeigen:

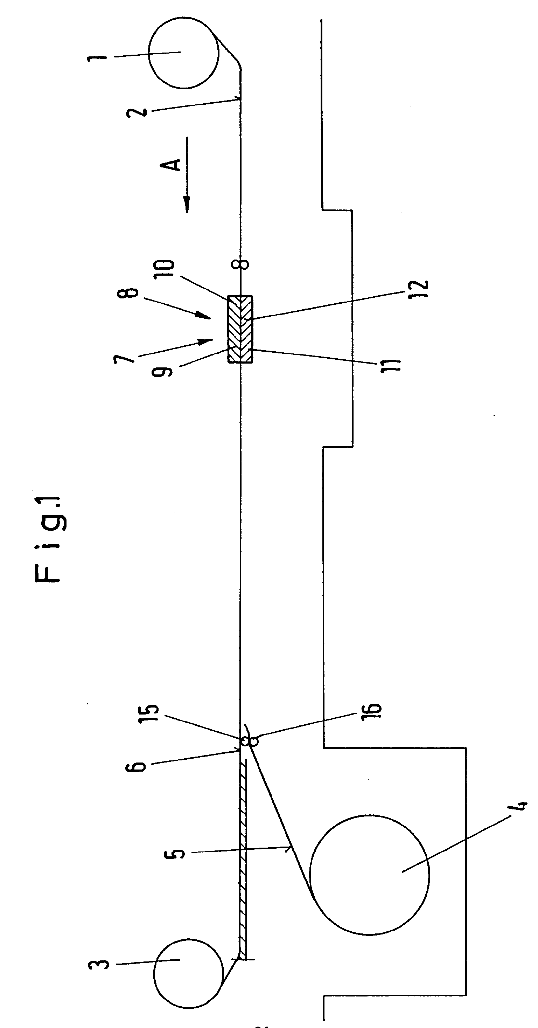

- Fig. 1: in ausschnittsweiser Darstellung die Ausgangssituation beim Überleiten von Schlechtbandmaterial auf einen Inspektionshaspel oder Schlechtblechhaspel, in schematischer Seitenansicht, abgebrochen dargestellt;

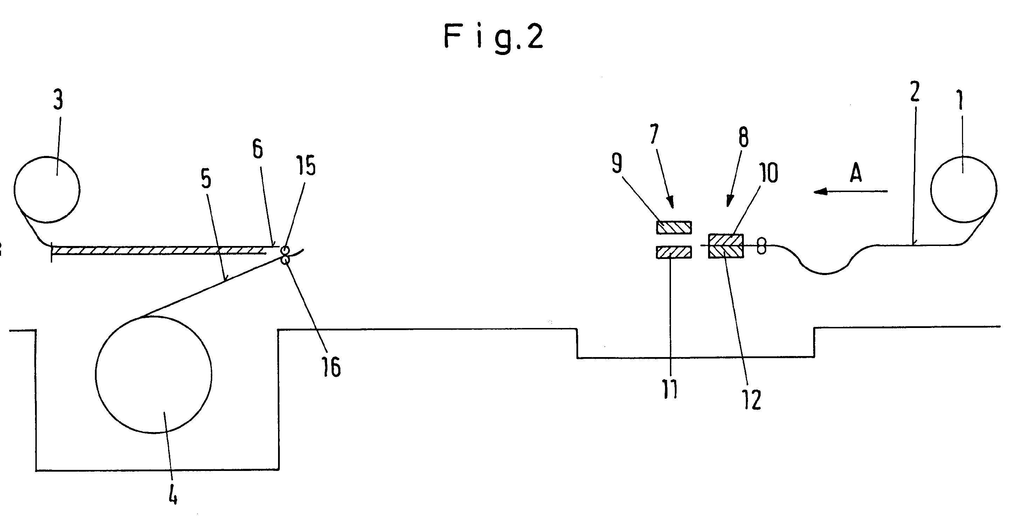

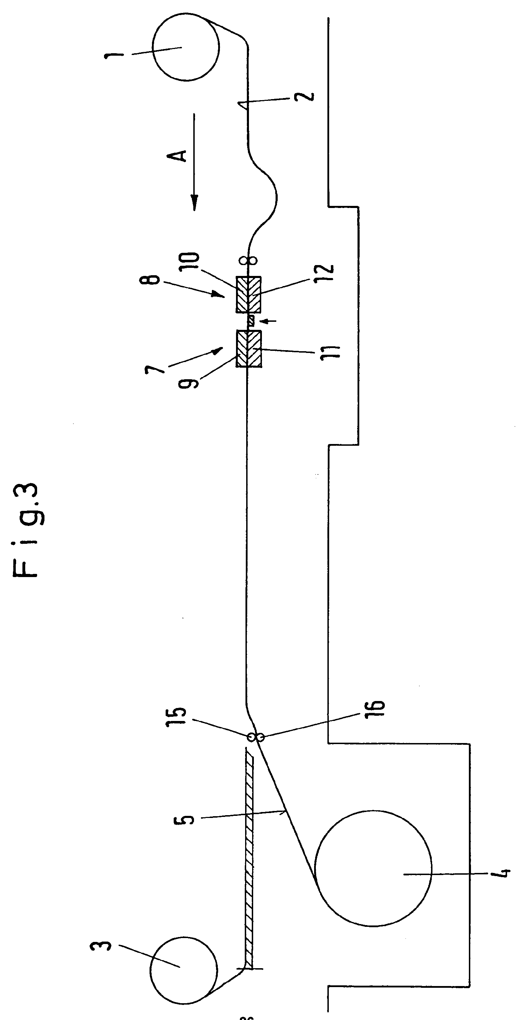

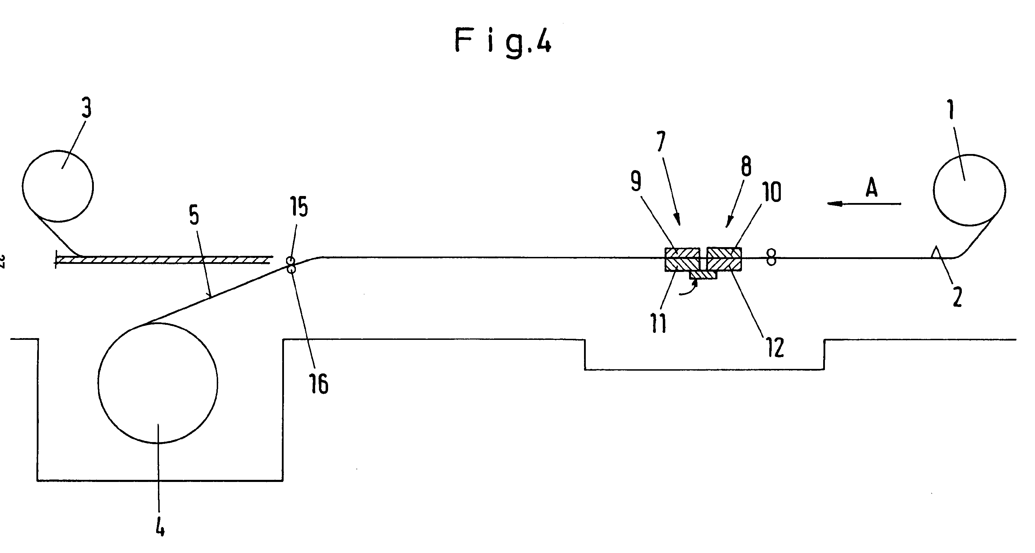

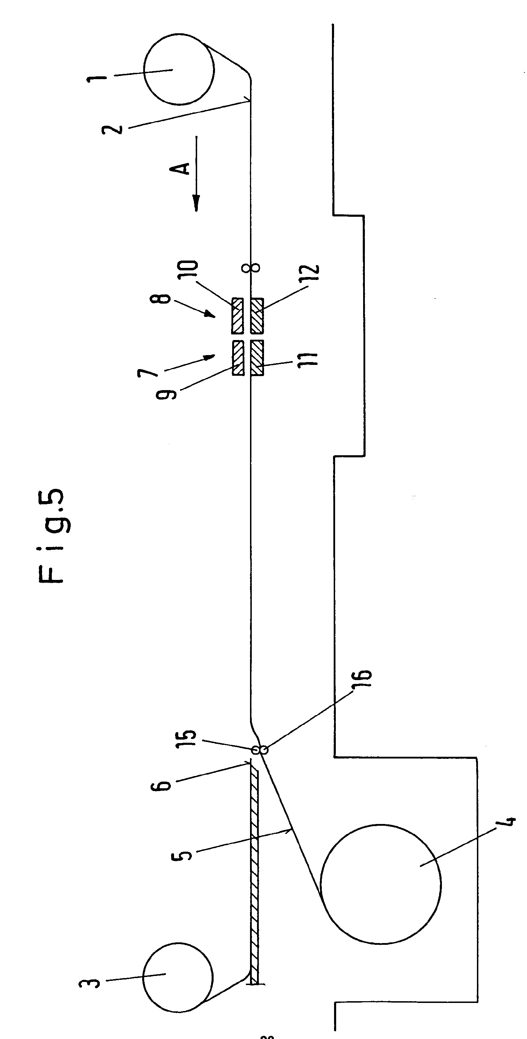

- Fig. 2 bis Fig. 5: verschiedene Verfahrensstufen beim Überleiten und Anschweißen des Schlechtbandmaterials an das Bandmaterial des Inspektions- oder Schlechtblechhaspels;

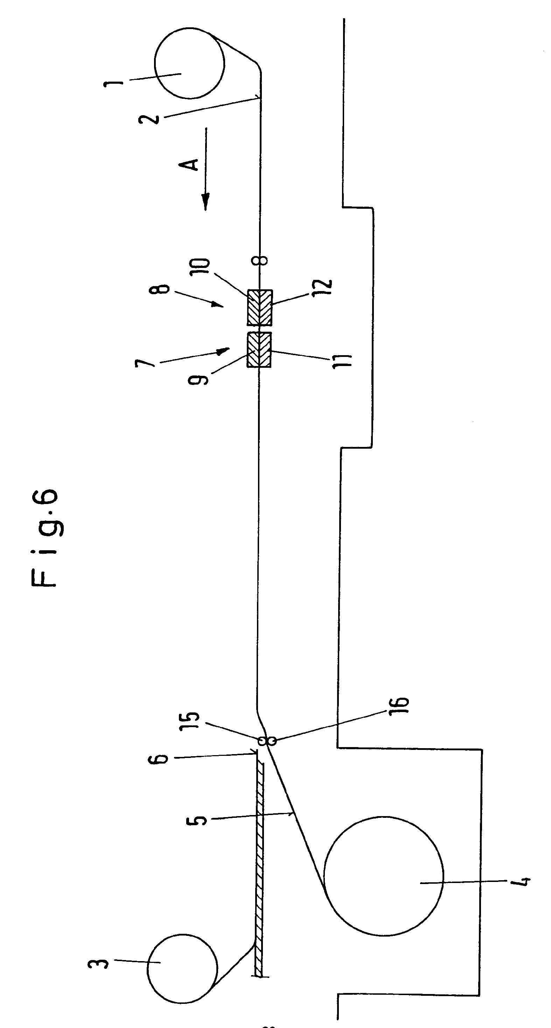

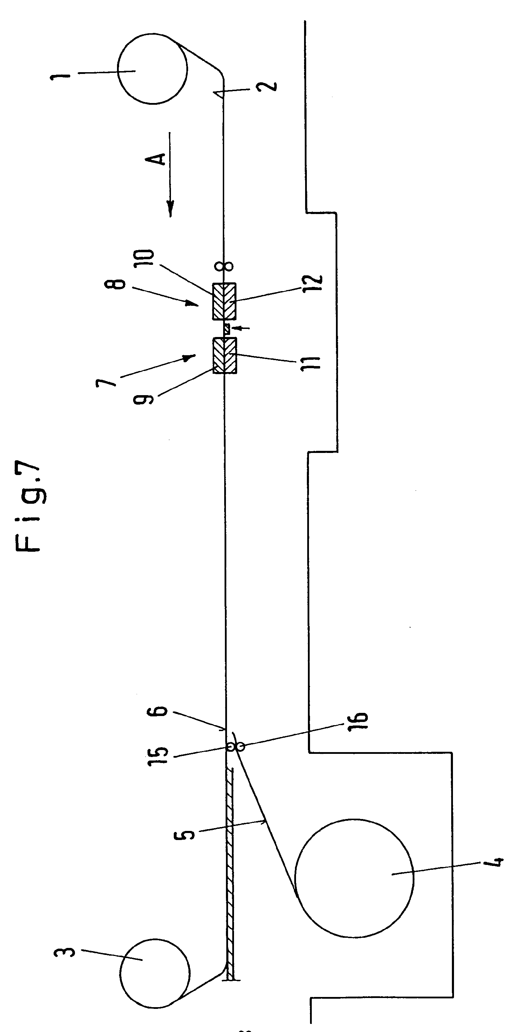

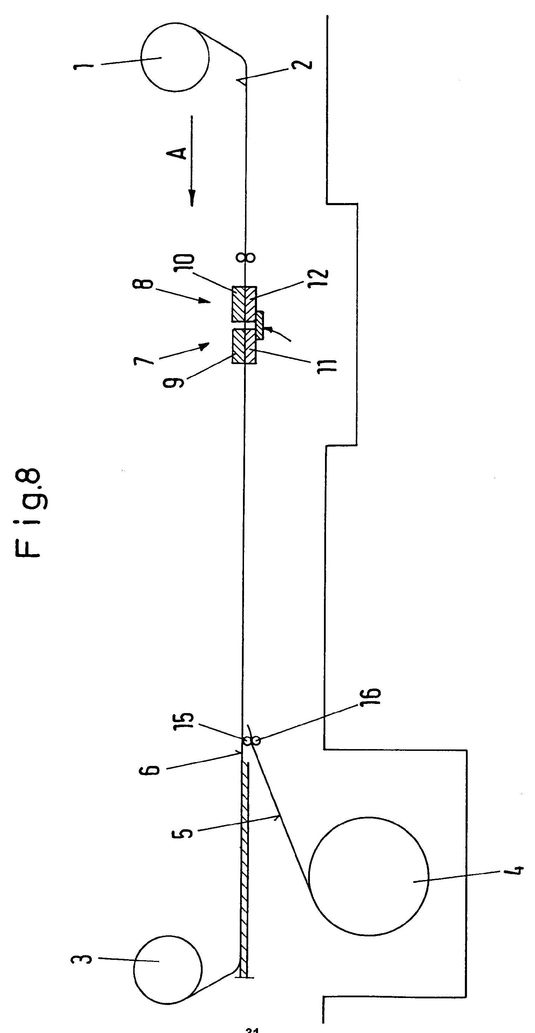

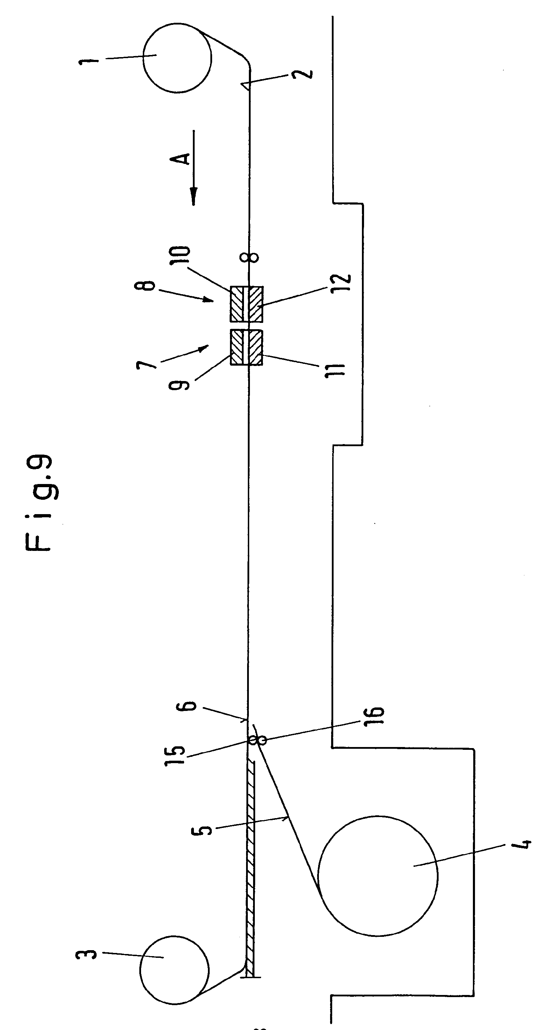

- Fig. 6 bis Fig. 9: verschiedene Verfahrensstufen beim Wechseln von Inspektionshaspel auf einen Gutblechhaspel;

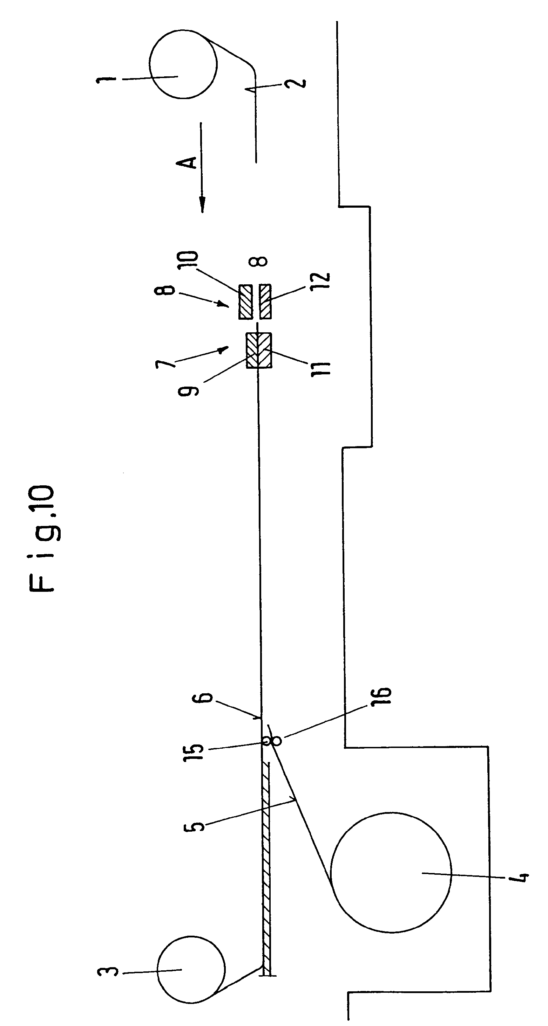

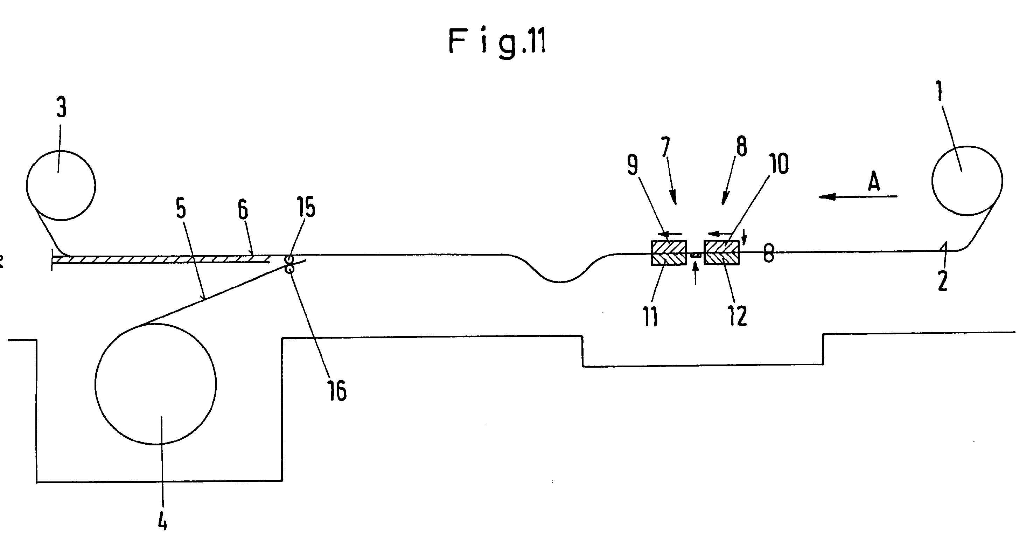

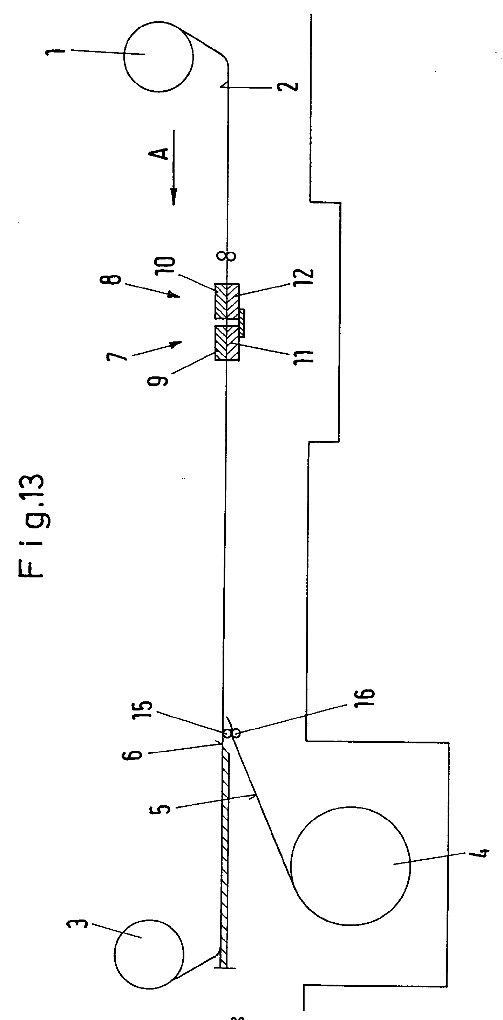

- Fig. 10 bis Fig. 13: das Verbinden des Coilendes des vorlaufenden Coils mit dem Coilende des nachlaufenden Coils;
- Fig. 14: eine Laserstrahlschweißanlage in der Seitenansicht;
- Fig. 15: eine Teildraufsicht auf die Laserstrahlschweißvorrichtung;
- Fig. 16: einen Querschnitt durch eine Seitenführungseinheit nach der Linie XVI - XVI der Fig. 18;
- Fig. 17: eine Draufsicht zu Fig. 16;
- Fig. 18: eine Vorrichtung gemäß der Erfindung in der Seitenansicht;

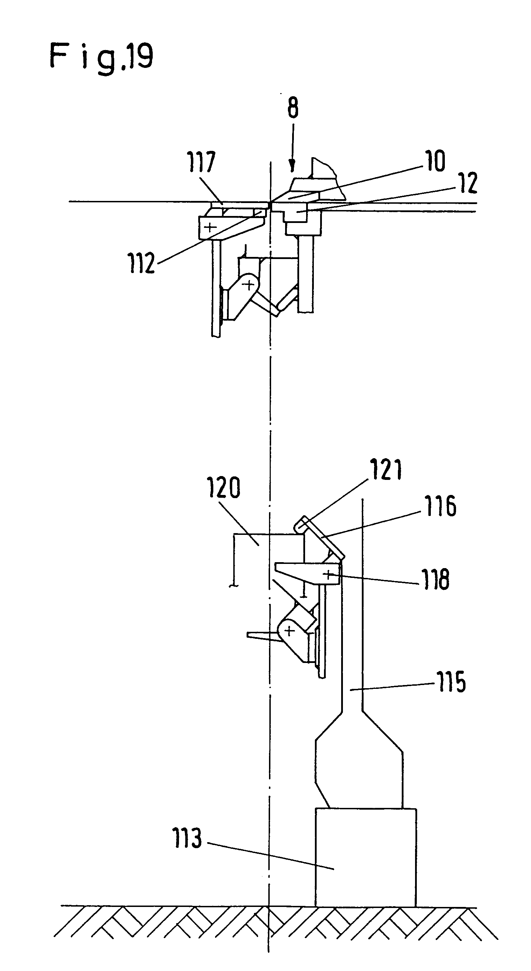

- Fig. 19: das Abtrennen eines endrandseitigen Blechrandstreifens links;

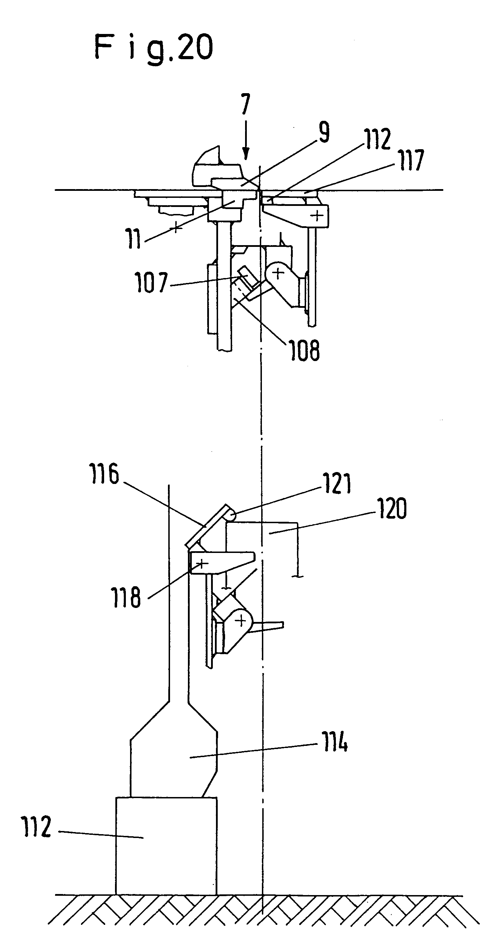

- Fig. 20: das Abtrennen eines endrandseitigen Blechrandstreifens rechts;

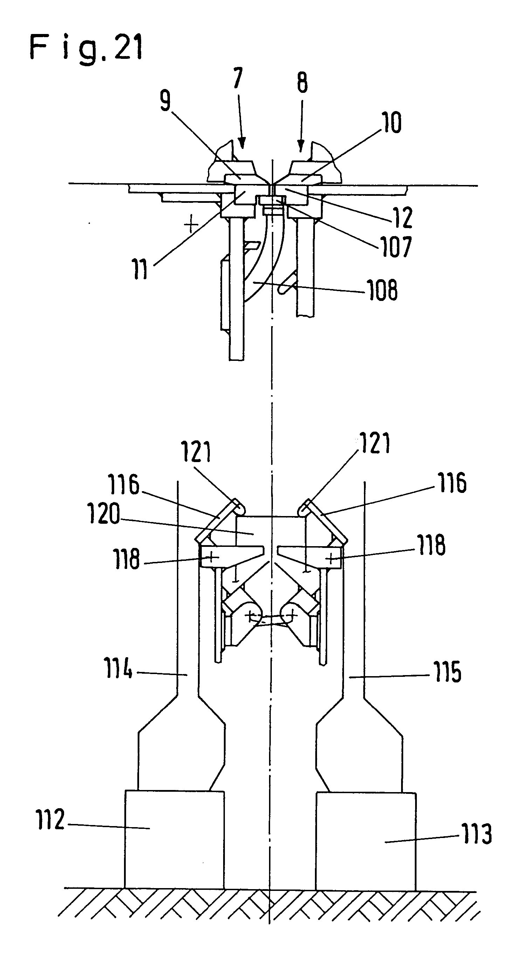

- Fig. 21: das Laserstrahlschweißen aneinander angrenzender Coilenden mit eingeschwenkter Unterkupferleiste;
- Fig. 22: eine Einzelheit aus Fig. 18 in größerem Maßstab;
- Fig. 23: ein Laser-Portal mit Strahlführungs-System für die Laserstrahlschweißvorrichtung in einer Vorrichtung gemäß der Erfindung;

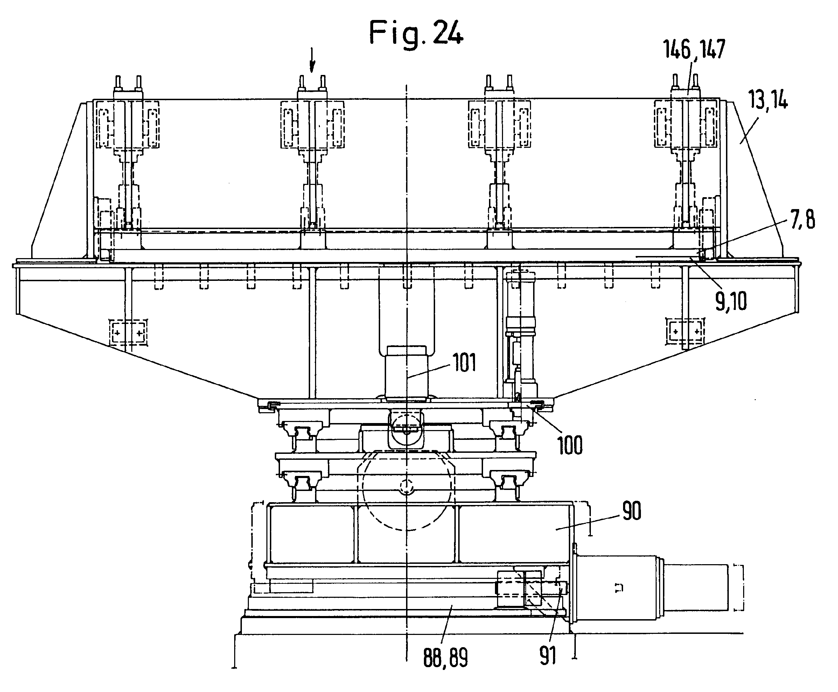

- Fig. 24: einen Schnitt nach der Linie XXIV - XXIV der Fig. 18.

In der Zeichnung ist die Erfindung in Anwendung auf eine Vorrichtung veranschaulicht, mittels welcher von einem Abhaspel 1 ein Blechband 2 auf ein Gutblechhaspel 3 aufwickelbar ist.

Mit dem Bezugszeichen 4 ist ein Schlechtblechhaspel, auch Inspektionshaspel genannt, bezeichnet, auf den Schlechtblech 5 aufwickelbar ist, das die vorgegebenen Qualitätsnormen nicht erfüllt hat.

Das Gutblech ist mit dem Bezugszeichen 6 bezeichnet.

Die erfindungsgemäße Vorrichtung bietet somit die Möglichkeit, von dem Blechband 2 Schlechtblech 5 auf den Inspektionshaspel 4 auszuschleusen und auch wieder auf den Gutblechhaspel 3 erneut Material aufzuwickeln, wenn wieder Gutblech 6, d. h. Blech mit den vorgegebenen Qualitätsnormen, anfällt.

Die erfindungsgemäße Vorrichtung sieht die nachfolgend beschriebene Möglichkeit vor, um das Blechband 2 aufzuschneiden, Schlechtblech 5 auf den Inspektionshaspel 4 auszuschleusen und ankommendes Gutblech 6 von dem Blechband 2 an das vorgelaufene Gutblech 6 durch Laserstrahlschweißen wieder erneut anzuschweißen.

Des weiteren sieht die erfindungsgemäße Vorrichtung Möglichkeiten vor, wie das Ende eines auf den Abhaspel 1 neu aufgebrachten Coils an das vorlaufende Coilende von Gutblech 6 angeschweißt werden kann.

Der Inspektionshaspel 4 kann somit auch entfallen. Die erfindungsgemäße Anlage läßt sich somit auch nur mit zwei Haspeln, z. B. dem Abhaspel 1 und dem Gutblechhaspel 3, betreiben.

Generell sind also die beschriebenen Verfahrensschritte und Vorrichtungsmerkmale auch auf Laserstrahlschweißvorrichtungen zum Anschweißen von Blechbahnenden - auch Coil genannt - anwendbar, bei denen es lediglich auf das Anschweißen von Coilenden ankommt. Dabei eröffnet - was nachfolgend ebenfalls noch beschrieben werden wird - die erfindungsgemäße Verfahrensweise mit der erfindungsgemäßen Vorrichtung die Möglichkeit, die Laserstrahlschweißnähte mit so hoher, innerhalb der vorgegebenen Normen gleichbleibender Schweißnahtgüte auszuführen, daß diese Bleche auch den hohen Qualitätsanforderungen im Kfz-Karosseriebau gerecht werden. Demnach lassen sich Bleche, die nach dem erfindungsgemäßen Verfahren geschweißt worden sind, auch ohne weiteres weiterbearbeiten, z. B. tiefziehen, um z. B. ein Bodenblech oder dgl. für eine Kfz-Karosserie daraus herzustellen.

Die Banddurchlaufrichtung ist mit einem Pfeil und mit dem Buchstaben "A" bezeichnet.

Die Vorrichtung weist zwei Klemmbackenpaare 7 bzw. 8 auf, die jeweils aus einer Oberklemmbacke 9, 10 bzw. je einer Unterklemme 11, 12 bestehen.

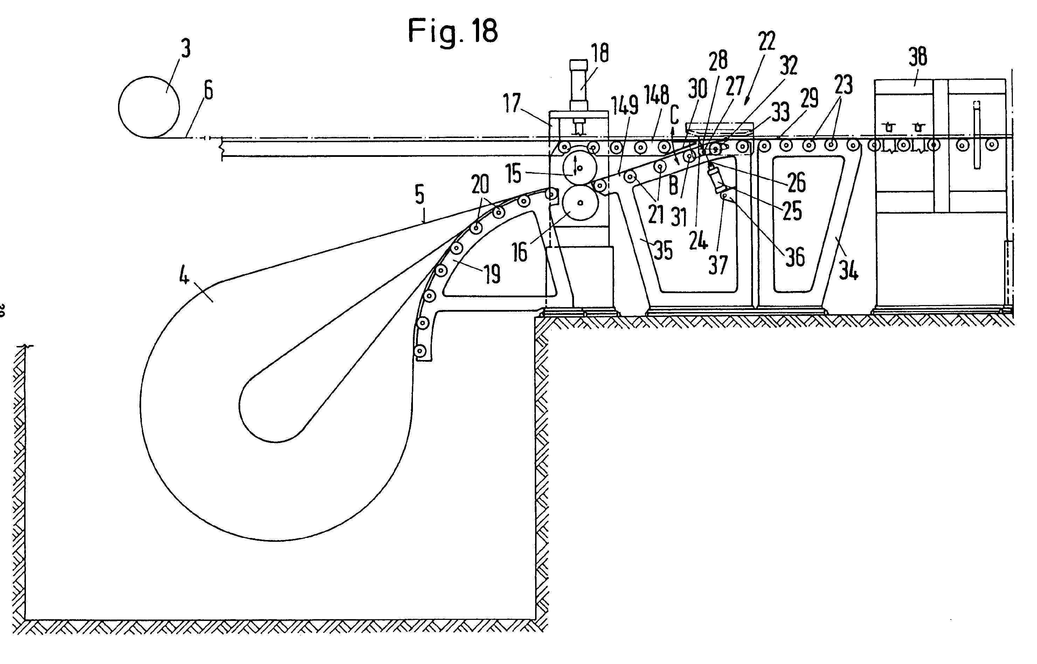

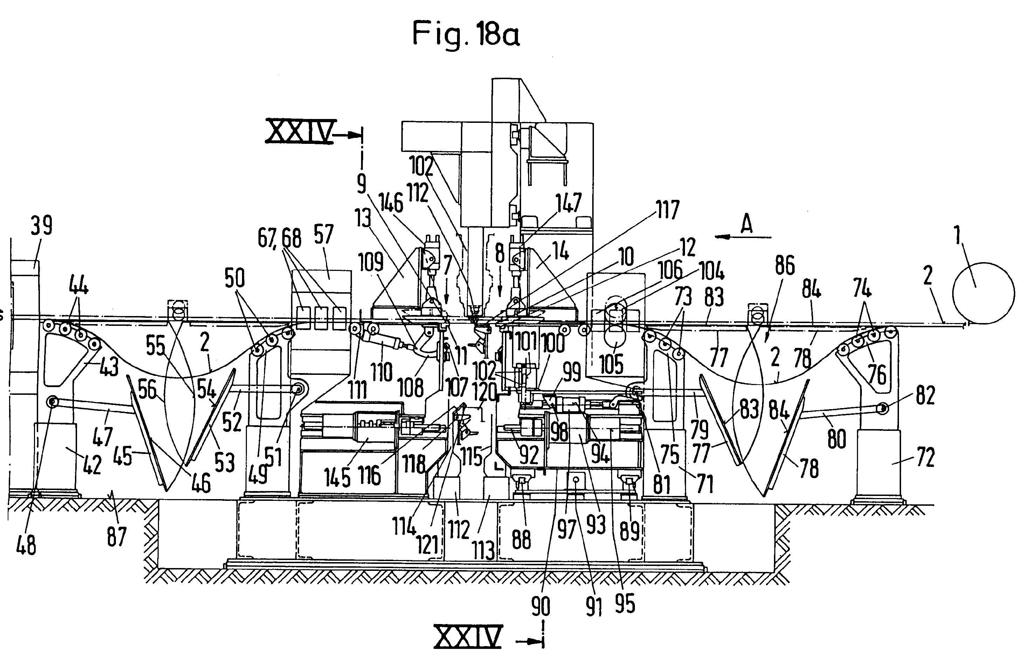

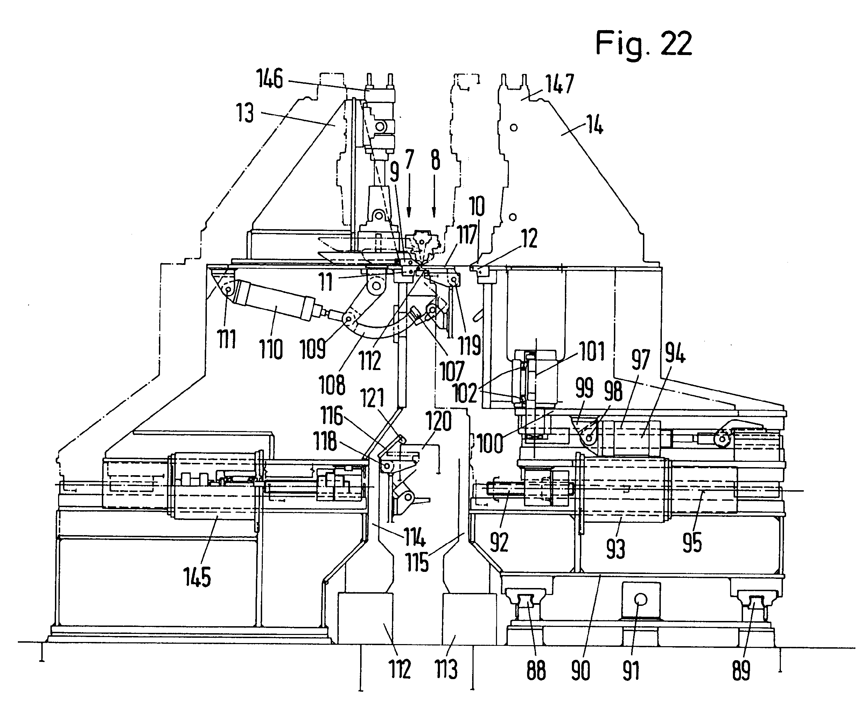

Die Klemmbackenpaare 7 bzw. 8 sind jeweils an Spannbrücken 13 bzw. 14 (Fig. 18 bzw. Fig. 22) angeordnet, die sowohl in Richtung A, also in Durchlaufrichtung des Blechbandes 2, als auch entgegengesetzt dazu, um jeweils ein begrenztes Maß verstellbar und in der jeweils eingenommenen Position auch arretierbar sind.

Mit den Bezugszeichen 15 und 16 sind Umlenkrollen bezeichnet, mittels derer aus der Bahn des Blechbandes 2 das Schlechtblech 5 zum Inspektionshaspel 4 umlenkbar ist. Die Umlenkrollen 15 und 16 sind in einem Joch 17 gelagert, wobei die Umlenkrolle 15 durch die Kolben-Zylinder-Einheit 18 höhenverstellbar und in der gewünschten Höhenlage auch arretierbar ist. Die Umlenkrolle 16 ist bei dieser Ausführungsform starr ausgebildet. Beide Umlenkrollen 15 und 16 sind drehbar angeordnet, wobei ihre Drehachsen parallel zueinander verlaufen. In Förderrichtung auf den Inspektionshaspel 4 schließt sich ein Stützsektor 19 (Fig. 18) an, der mehrere mit Abstand zueinander angeordnete, im Durchmesser kleiner als die Umlenkrollen 15 und 16 ausgebildete Stützrollen 20 trägt, die parallele Drehachsen zueinander aufweisen und die das Schlechtblech 5 nach den Umlenkrollen 15 und 16 stützen und allmählich auf den Inspektionshaspel 4 ablenken.

Vor den Umlenkrollen 15 und 16 ist eine aus zahlreichen Stützrollen 21 mit parallelen Drehachsen zueinander ausgebildete Stützbahn 22 vorgesehen, die im Bereich einer oberen Rollenbahn 23 eine Blechweiche 24 aufweist, die über eine abwechselnd beidseitig mit Druckmitteldruck zu beaufschlagende Kolben-Zylinder-Einheit 25 in Richtung B bzw. C hin- und herschwenkbar ist. Die Blechweiche 24 ist mit einer Kolbenstange 26 der Kolben-Zylinder-Einheit 25 verbunden, die insbesondere hydraulisch beaufschlagt sein kann. Die Kolbenstange 26 ist über eine Schwenkachse 27 mit der Blechweiche 24 verbunden. Die Blechweiche 24 weist einen oberen Abschnitt 28 auf, der in der oberen Schwenkstellung bündig mit der oberen Transportbahn 29 für das Blechband 2 abschließt und in der aus Fig. 18 ersichtlichen abgeschwenkten Stellung mit Spaltabstand zu einer Umlenkleiste 30 angeordnet ist, so daß das Schlechtblech 5 auf Stützrollen 31 bzw. 32 ruhend zu den Stützrollen 21, zu den Umlenkrollen 15 und 16 und zu den Stützrollen 20 abgelenkt werden kann.

Mit dem Bezugszeichen 33 ist ein Weichentunnel bezeichnet, in den das Blechband 2 einläuft und - wenn es sich um Gutblech 6 handelt - zum Gutblechhaspel 3 weitertransportiert wird.

Die obere Rollenbahn 23 wird von einem Gestell 34 getragen, ebenso wie die Stützrolle 21 von einem Gestell 35. Letzteres trägt auch die Kolben-Zylinder-Einheit 25 über ein Lager 36, mit dem die Kolben-Zylinder-Einheit 25 über eine Schwenkachse 37 verbunden ist, die parallel zur Schwenkachse 27 verläuft.

Mit dem Bezugszeichen 38 ist eine Lochstation bezeichnet, die aber auch entfallen kann. In der Lochstation kann z. B. das Blechband gelocht werden.

Mit 39 ist eine Bürststation bezeichnet, in welcher Schweißnähte durch motorisch angetriebene Bürsten 40 und 41 von oben und unten gleichzeitig gebürstet werden können. Die Bürsten 40 und 41 können in bezug auf die Blechoberfläche einstellbar ausgebildet sein, was aus der Zeichnung allerdings nicht hervorgeht.

Mit dem Bezugszeichen 42 ist ein Stützbock bezeichnet, der ein Segment 43 trägt, das mehrere Stützrollen 44 mit parallelen Drehachsen zueinander aufweist. Die Bahn, die durch die Stützrollen 44 gebildet wird, erstreckt sich von der Transportbahn 29 nach unten in bezug auf die Bahn eines abklappbaren Tisches 45. Selbstverständlich kann der Tisch 45 auch wieder in die strichpunktierte Lage in Fig. 18 geschwenkt werden, in der seine Oberfläche 46 bündig mit der Transportbahn 29 abschließt. Der Tisch 45 ist an einem Lenkergetriebe 47 angeordnet, das um eine Achse 48 schwenkbeweglich an dem Segment 43 gelagert ist.

Mit dem Bezugszeichen 49 ist ein anderes Stützsegment bezeichnet, das ebenfalls mehrere Stützrollen 50 trägt, die parallele Drehachsen zueinander aufweisen. An dem Stützsegment 49 ist über eine Achse 51 ein Lenkergetriebe 52 schwenkbeweglich angeordnet, das mit einem weiteren Tisch 53 verbunden ist, der ebenfalls aus der Transportbahn 29 in die aus Fig. 18 ersichtliche abgeklappte Stellung abklappbar ist. Die Oberfläche 54 des Tisches 53 liegt in der strichpunktierten oberen Lage bündig in der Ebene der Transportbahn 29.

Das Blechband 2 ist in der aus Fig. 18 ersichtlichen abgeklappten Lage der Tische 45 und 53 lediglich schematisch in Fig. 18 angedeutet. Die Bahnkurven der Vorderkanten der Tische 45 und 53 sind mit den Bezugszeichen 55 und 56 bezeichnet. Der Radius, den das Blechband 2 in der abgeklappten Lage der Tische 45 und 53 einnimmt, trägt den Buchstaben D. Das Blechband 2 hängt also in der abgeklappten Lage der Tische 45 und 53 in der in Fig. 18 gezeichneten Lage nach unten durch und bildet eine große Schlaufe 85.

Die Tische 45 und 53 werden motorisch geschwenkt, z. B. über Zahnritzel und Antriebsmotoren oder über hydraulisch angetriebene Kolben-Zylinder-Einheiten (nicht dargestellt).

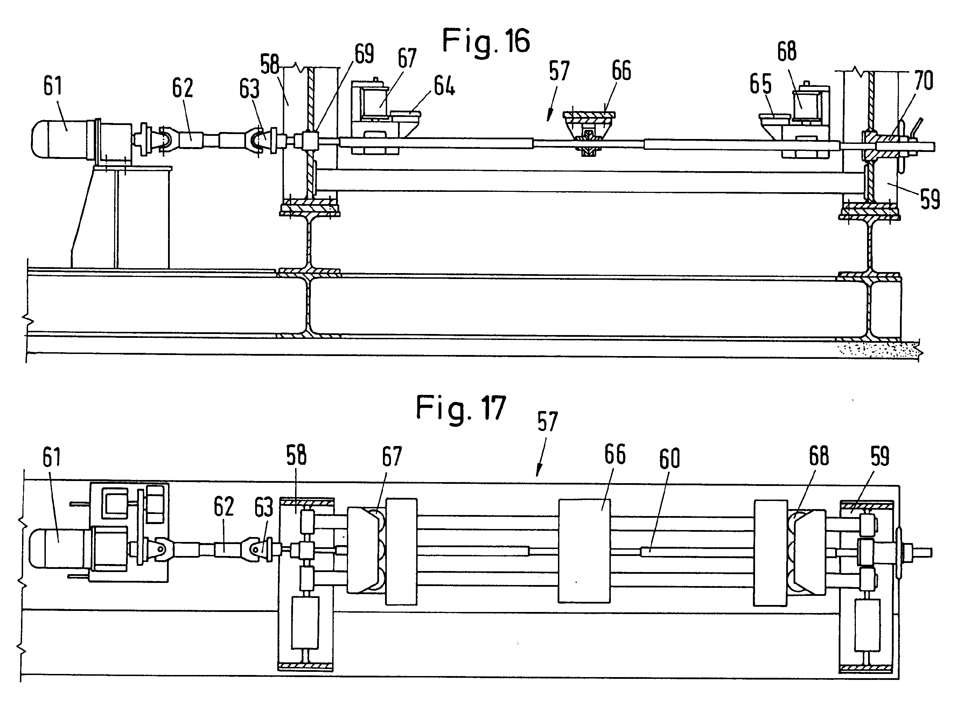

Mit dem Bezugszeichen 57 ist eine Seitenführung bezeichnet, die im einzelnen aus den Fig. 16 und 17 hervorgeht. Die Seitenführung besteht im wesentlichen aus zwei Ständern 58 und 59, von denen der eine Ständer 58 auf der einen und der andere Ständer 59 auf der anderen Seite des Blechbandes 2 angeordnet ist. Quer unterhalb der Transportbahn 29 erstreckt sich eine Spindel 60, die über einen Motor 61 in beiden Richtungen über eine Kardanwelle 62 und über eine Kupplung 63 antreibbar ist.

Mit den Bezugszeichen 64 und 65 sowie 66 sind Auflageplatten bezeichnet, wobei die Auflageplatte 66 relativ zum Blechband 2 stillsteht, während sich die Auflageplatten 64 und 65 je nach Antriebsrichtung der Spindel 60 aufeinander zubewegen bzw. voneinander entfernen lassen. Mit den Auflageplatten 64 und 65 sind vertikal angeordnete Rollen 67 und 68 verbunden, wobei in jeder Ebene der Rollen 67 und 68 mehrere solcher Rollen in Durchlaufrichtung A hintereinander angeordnet sind. Aus Fig. 18 sind drei solcher Rollen 67 bzw. 68 zu ersehen. Die Rollen 67 und 68 führen das Blechband 2 seitlich.

Die Spindel 60 ist in Lagern 69 bzw. 70 gelagert, die in den Ständern 58 bzw. 59 angeordnet sind.

Zwischen dem Abhaspel 1 und der Spannbrücke 14 sind mit Abstand in Durchlaufrichtung A zueinander zwei Ständereinheiten 71 und 72 vorgesehen, die jeweils an ihrem oberen Bereich mehrere Stützrollen 73 und 74 auf je einem Sektor 75 bzw. 76 tragen. Im Bereich zwischen den beiden Sektoren 75 und 76 sind wiederum zwei abklappbare Tische 77 und 78 angeordnet. Der Tisch 77 ist über ein Lenkergetriebe 79 und der Tisch 78 über ein Lenkergetriebe 80 mit einer Achse 81 bzw. 82 verbunden, derart, daß die Tische 77 und 78 wie die Tische 45 und 53 in vertikaler Ebene schwenkbeweglich sind. Die aufwärts geschwenkte Stellung der Tische 77 und 78 lassen die strichpunktierten Darstellungen erkennen, in denen die Oberflächen 83 bzw. 84 mit der Transportebene für das Blechband 2 zusammenfallen. In abwärts geschwenkter Stellung der Tische 77 und 78 bildet das Blechband 2 eine Schlaufe 86 und ruht auf den Stützrollen 73 und 74 auf. Somit ist auf beiden Seiten der Klemmbackenpaare 7 und 8 die Möglichkeit zur Bildung je einer Blechschlaufe 85 bzw. 86 gegeben. Die Blechschlaufen 85, 86 verhindern rückstellende Zugkräfte auf das Blechband 2 beim horizontalen Bewegen der Blechbandenden durch die Klemmbackenpaare 7 bzw. 8.

Die Einheiten der Vorrichtung, also das Joch 17, die Gestelle 34 und 35, die Lochstation 38, die Bürststation 39, der Stützbock 42, die Seitenführung 57, die Spannbrücken 13, 14 mit den Klemmbackenpaaren 7 und 8, die Ständereinheiten 71 und 72 sind jeweils auf einem Fundament 87 gelagert.

Mit den Bezugszeichen 88 und 89 sind orthogonal zur Durchlaufrichtung A sowie horizontal verlaufend Führungen bezeichnet, die vorliegend als Schwalbenschwanzführungen ausgebildet sind, auf denen ein Tisch 90 angeordnet ist.

Mit dem Bezugszeichen 91 ist ein Spindeltrieb bezeichnet, über den der Tisch 90 horizontal und orthogonal zur Durchlaufrichtung A in beiden Richtungen verstellbar und in der jeweils gewünschten Stellung auch arretierbar ist.

Auf dem Tisch 90 ist ein Spindeltrieb 92 angeordnet, dessen Längsachse sich parallel zur Durchlaufrichtung A unterhalb der Blechbandebene erstreckt. Mit 93 ist der Antriebsmotor für den Spindeltrieb 92 bezeichnet. Oberhalb des Spindeltriebes 92 sowie mit seiner Längsachse 94 parallel zur Längsachse 95 des Spindeltriebes 92 verlaufend ist ein Luftzylinder 96 angeordnet, dessen Zylinder 97 über ein Schwenklager 98 mit einem Lager 99 verbunden ist, das einstückig mit einem Gehäuse 100 in Verbindung steht. Das Gehäuse 100 ist um eine vertikale Schwenkachse 101 um ein begrenztes Winkelmaß nach beiden Seiten schwenkbeweglich angeordnet. Mit 102 sind Lager bezeichnet. Der Luftzylinder 96 dient als Federelement für die gesamte aus Spannbrücke 14, Klemmbacken 10, 12, Gehäuse 100, Luftzylinder 96, Spindeltrieb 92 und Tisch 90 bestehende Einheit beim Fügehub in Richtung Durchlaufrichtung A gegen das feststehende und durch die Klemmbacken 9 und 11 gehaltene Blechende. Somit ist die Einheit aus Spannbrücke 14, Klemmbacken 10 und 12, Gehäuse 100, Spindeltrieb 92, sowie Tisch 90 und Führung bestehende Baueinheit sowohl in Durchlaufrichtung A als auch entgegengesetzt dazu zwecks Schlaufenbildung, als auch um die vertikale Schwenkachse 101 beweglich ausgebildet. Der Gesamthub, den die Spannbrücke 13 mit Klemmbacken 9 und 11, also auch die Spannbrücke 14 mit Klemmbacken 10 und 12, Gehäuse 100, Spindeltrieb 92 und Tisch 90 jeweils einzeln durchführen können, beträgt bei der dargestellten Ausführungsform 150 mm. Der Schwenkwinkelbereich um die vertikale Schwenkachse 101 beschränkt sich auf einen spitzen Winkel nach beiden Seiten.

Zwischen den Klemmbacken 9, 11 bzw. 10, 12 ist eine Laserstrahlschweiß- und -Trennvorrichtung 102 angeordnet. Der Aufbau des Lasers wird später noch beschrieben. Der Laser ist sowohl in vertikaler Richtung, als auch orthogonal zur Durchlaufrichtung A sowie horizontal zur Bahnoberfläche verschieblich angeordnet. Des weiteren ist der Laser mindestens in Durchlaufrichtung A und entgegengesetzt dazu sowie um ein gewisses Winkelmaß kipp- bzw. schwenkbeweglich angeordnet, um z. B. bei unterschiedlichen Blechdicken eine saubere Schweißnaht zu erzielen.

Mit den Bezugszeichen 104 und 105 sind Rollen bezeichnet, wobei die Rolle 104 gefedert ausgebildet ist, während die Rolle 105 eine starre Lagerung besitzt. Dem Rollenpaar ist ein Impulsgeber für den Umsatz der durch den Laser 102a zu bildenden Schweißnaht in die Bürststation 39 zugeordnet, derart, daß die Schweißnaht auch tatsächlich zentrisch zu den beiden Bürsten 40 und 41 transportiert werden kann. Im Bereich der Rollen 104 und 105 sind bei der dargestellten Ausführungsform auf jeder Seite des Blechbandes 2 mit vertikalen Drehachsen Seitenführungsrollen 106 angeordnet. Die Seitenführungsrollen 106 können die gleiche Ausbildung und Anordnung wie die Rollen 67, 68 aufweisen, wie dies im Zusammenhang mit den Fig. 16 und 17 beschrieben wurde.

Mit dem Bezugszeichen 107 ist eine Unterkupferleiste bezeichnet, die an einem Winkelhebel 108 angeordnet ist. Der Winkelhebel 108 ist über eine Achse 109 mit einer abwechselnd beidseitig mit Druckmitteldruck beaufschlagten Kolben-Zylinder-Einheit 110 verbunden, die über eine Schwenkachse 111 unterhalb des Blechbandes 2 verbunden ist. Durch abwechselnd beidseitiges Beaufschlagen der Kolben-Zylinder-Einheit 110 läßt sich die Unterkupferleiste 107 in ihre abgesenkte Stellung (Fig. 18) oder in ihre aufwärts geschwenkte Stellung schwenken, in der sie die durch die Laserstrahlschweiß- und -Trennvorrichtung 102 zu bildende Schweißnaht dicht unterfaßt.

Mit den Bezugszeichen 112 bzw. 113 sind Transportvorrichtungen bezeichnet, in die über Kanäle 114 bzw. 115 die vom Laser endseitig abgetrennten Blechrandstreifen hineinfallen. Die Blechrandstreifen werden jeweils über Auflagerstücke 116 bzw. 117, die um Achsen 118 bzw. 119 abklappbar sind, in die Kanäle 114 bwz. 115 abgeworfen. Hierzu stoßen die Auflagerstücke 116 und 117 mit balligen Nasen 121 bzw. 122 gegen einen Anschlag 120, so daß die jeweils auf den Auflagerstücken 116 bzw. 117 befindlichen, durch die Laserstrahlschweiß- und -Trennvorrichtung 102 abgeschnittenen Blechrandstreifen in den zugeordneten Kanal 114 bzw. 115 hineinfallen und durch die Transportvorrichtung 112 bzw. 113 weggefördert werden. Bei den Transportvorrichtungen 112 oder 113 kann es sich um Stetigförderer oder intermittierende Förderer handeln. Statt dessen können hier aber auch Auffangbehälter angeordnet sein, die von Zeit zu Zeit abtransportiert werden.

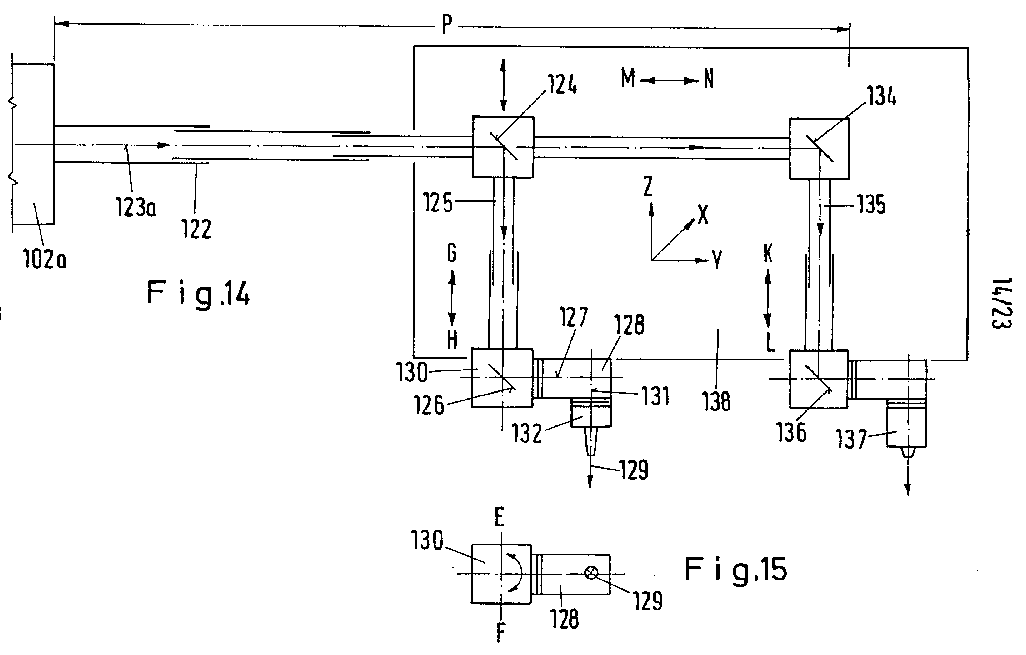

Mit dem Bezugszeichen 102a ist ein Laser bezeichnet, während 123a eine Teleskopanordnung zur Führung des Laserstrahls 123 darstellt. Der Laserstrahl 123 trifft auf eine Strahlweiche 124. Der umgelenkte Laserstrahl durchläuft ein Teleskoprohr 125, das in Richtung G, H verstellbar angeordnet ist. Der Laserstrahl wird abermals an einem Spiegel 126 in einem Gehäuse 130 umgelenkt und verläßt das Gehäuse 130 als Laserstrahl 127 und gelangt zu einem Schweißkopf 128 und tritt aus der Schweiß- bzw. Schneidoptik 132 als Laserstrahl 129 aus. Das Gehäuse 130 mit dem Spiegel 126 und dem Schweißkopf 128 und die Schweiß- bzw. Schneidoptik 132 sind um eine vertikale Achse 131 in Richtung E bzw. F (Fig. 15) um jeweils ein begrenztes Winkelmaß verstellbar angeordnet.

Außerdem besitzt die Vorrichtung ein Rohr 133, durch das der Laserstrahl bis zu einem Umlenkspiegel 134 gelangen kann. Der umgelenkte Laserstrahl durchläuft eine Teleskoprohranordnung 135 und trifft auf eine Optik 136 und gelangt schließlich in einen Schneidkopf 137. Wie man erkennt, ergibt die Verstellung G, H die Z-Verstellung für die Schweißoptik 132, während eine Verstellung in Richtung K, L die Z-Verstellung des Schneidkopfes 137 ergibt. Das Schwenken um die vertikale Achse 131 ergibt die X/Y-Verstellung der Schweißoptik 132.

Die Laserstrahlschweiß- und Schneidvorrichtung ist an einem Wagen 138 angeordnet und in Richtung M bzw. N beweglich. Z. B. kann das Maß P bei einem angenommenen Fall maximal ca. 4.000 mm und minimal 2.200 mm betragen.

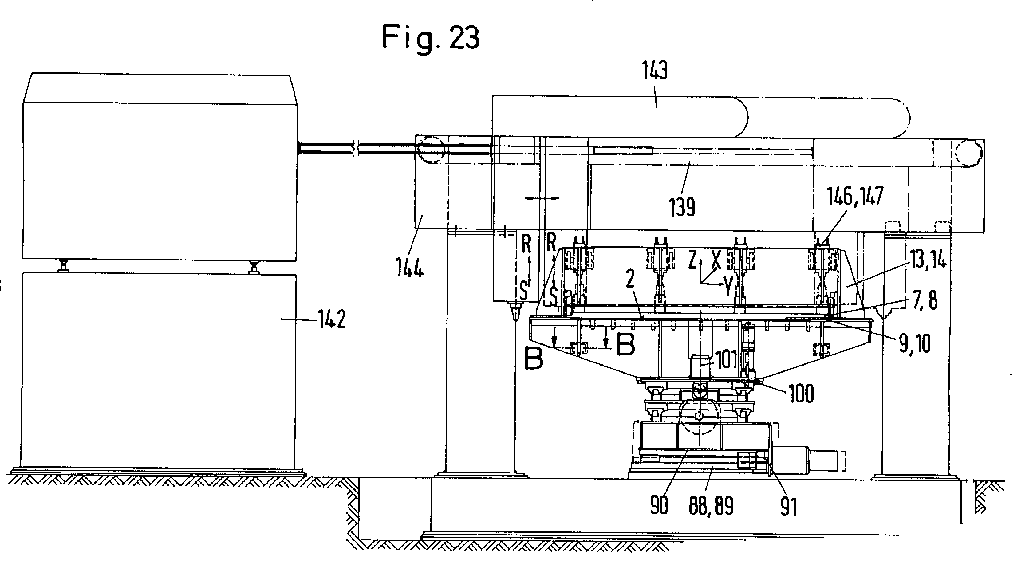

Wie aus Fig. 23 ersichtlich ist, sind der Schweißkopf 132 und der Schneidkopf 137 jeweils in Richtung R, S in bezug auf das Blechband 2 höhenverstellbar.

Die Verstellung des Wagens 138 geschieht über einen Spindeltrieb 139 (Fig. 23).

Schweißkopf 132 und Schneidkopf 137 sind an einem Querportal 140 angeordnet, das auf einem Grundgestell 141 aus U-Eisen oder dgl. aufruht.

Eine Aufbockkonsole ist mit dem Bezugszeichen 142 für den Laser bezeichnet. Bei 143 ist eine Kabelschleppanordnung schematisch angedeutet, während 144 einen Faltenbalg zur Abdeckung darstellt.

Wie aus Fig. 18 hervorgeht, sind die Spannbrücke 13 und damit auch die beiden Klemmbacken 9 und 11 durch einen Spindeltrieb 145 in Durchlaufrichtung A und entgegengesetzt dazu um ein begrenztes Maß verstellbar. Bei Verstellung z. B. in Förderrichtung A führt dies zur Bildung der Blechschlaufe 85, während durch die Betätigung des Spindeltriebes 92 die Blechschlaufe 86 zu bilden ist.

Die Klemmbacken 9, 11 bzw. 10, 12 sind jeweils durch Kolben-Zylinder-Einheiten 146 bzw. 147 zu schließen und zu öffnen. Die Kolben-Zylinder-Einheiten 146, 147 sind abwechselnd beidseitig durch Druckmitteldruck, insbesondere hydraulisch, zu beaufschlagen. Die erforderlichen Steuerleitungen, die elektrischen und elektronischen Bauelemente sind aus der Zeichnung nicht erkennbar.

Die Wirkungsweise ist folgende:

### I. Wechsel von Umwickeln Abhaspel 1 nach Gutblechhaspel 3 zu Umwickeln Abhaspel 1 nach Inspektions- oder Schlechtblechhaspel 4:

Tritt ein schlechter Blechbereich auf, so wird die Trennstelle schlecht/gut in der Schweißmaschine positioniert.

Anschließend werden die Klemmbacken 10, 12 an der Einlaufseite und die Klemmbacken 9, 11 an der Auslaufseite geschlossen.

Daraufhin wird der Schneid- bzw. Trennkopf 137 der Laserstrahlschweißvorrichtung horizontal und orthogonal zur Durchlaufrichtung A über das Blechband 2 bewegt und das Blechband 2 an dieser Stelle durch den Laserstrahl durchgeschnitten.

Daraufhin werden die Klemmbacken 10, 12 an der Einlaufseite entgegen der Durchlaufrichtung A durch Betätigen des Spindeltriebes 92 zur Bildung der Schlaufe 86 horizontal verfahren. Vorher werden die Tische 77 und 78 in die aus Fig. 18 ersichtliche Lage motorisch nach unten abgeklappt. Die Blechschlaufe 86 bildet sich dann etwa so aus wie in Fig. 18.

Anschließend werden die Klemmbacken 9 und 11 auf der Auslaufseite durch entsprechende Druckmittelbeaufschlagung der Kolben-Zylinder-Einheit 146 geöffnet und das Gutblech 6 aus dem Störbereich durch Einschalten des Haspelantriebes des Gutblechhaspels 3 wegbewegt, und zwar etwa bis zu dem Endbereich 148 (Fig. 18). Der Weg, der hierbei zurückgelegt wird, beträgt z. B. 6 m, wobei das Gutblech 6 mit einer Geschwindigkeit von etwa 0,5 m/s aus dem Störbereich wegbewegt wird.

Anschließend wird die Kolben-Zylinder-Einheit 25 durch entsprechende Druckmittelbeaufschlagung so betätigt, daß die Blechweiche 24 nach unten geschwenkt wird zum Einspeisen des Schlechtblechendes 149 vom Inspektionshaspel 4 auf die Rollenbahn 23.

Daraufhin wird das vom Inspektionshaspel 4 kommende Blech in die Laserstation mit z. B. 100 mm Blechüberstand zum Fokuspunkt des Lasers eingespeist und die durch das betreffende Auflagerstück gebildete Blechunterstützung zum Trennen an der Einlaufseite angehoben.

Daraufhin werden die Klemmbacken 9 und 11 an der Auslaufseite durch entsprechende Druckmittelbeaufschlagung der Kolben-Zylinder-Einheit 146 geschlossen.

Dann erfolgt das randseitige Beschneiden des Blechbandes 2 an der Auslaufseite. Während der Laser den aus den Klemmbacken 9 und 11 in Richtung auf die Klemmbacken 10 und 12 hervorragenden Blechrandbereich beschneidet, erfolgt ein Abgleich des Seitenversatzes an der Einlaufseite gemäß Signal von der Laserachse. Z. B. kann mit dem Trennkopf des Lasers wenigstens ein Sensor verbunden sein, der den Bandanfang und das Bandende - über die Bandbreite gesehen - genau registriert und über Inkrementalgeber damit die Breite des Bleches, das aus den Klemmbacken 9 und 11 hervorragt, festhält. Diese Werte werden gespeichert und über den Spindeltrieb 91 der Tisch 90 und alle damit befestigten Anlagenteile orthogonal und horizontal zum Blechband 2 so justiert, daß das aus den Klemmbacken 10 und 12 hervorragende Blechband nicht seitenversetzt zu dem in den Klemmbacken 9 und 11 eingeklemmten Blechband ist.

Anschließend wird die durch das betreffende Auflagerstück gebildete Blechunterstützung an der Einlaufseite, also die den Klemmbacken 10 und 12 zugeordnete Blechunterstützung, abgesenkt und der linke Blechrandstreifen entsorgt, d. h. er fällt über das Auflagerstück 116 in den Kanal 114 und damit in die Transportvorrichtung 112 und wird abtransportiert oder hier gespeichert, sofern ein Abfallbehälter hier vorgesehen sein sollte.

Daraufhin führt die aus Spannbrücke 14, Gehäuse 100 und Tisch 90 bestehende Gesamteinheit einen Fügehub in Durchlaufrichtung A durch, angetrieben durch den Spindeltrieb 92. Dabei wird die Schlaufe 86 beseitigt. Die Antriebe für die Tische 77 und 78 werden aktiviert und diese in ihre aus Fig. 18 ersichtliche strichpunktierte Lage hochgeschwenkt. Ein etwaiger Winkelversatz kann durch Schwenken der Gesamteinheit um die Schwenkachse 101 ausgeglichen werden.

Der Luftzylinder 96 dient beim Fügehub als Feder.

Anschließend wird die Unterkupferleiste 107 hochgeschwenkt.

Schließlich wird der Schweißkopf 128 der Laserstrahlschweißvorrichtung horizontal und quer zum Blechband bewegt, wobei je nach Blechdicke auch ein Verschwenken bzw. Einstellen in Richtung E bzw. F (Fig. 14) erfolgen kann. Dabei werden die Blechbahnenden durch eine Laserschweißnaht miteinander verbunden.

Daran anschließend öffnen sich die Klemmbacken 9, 11 und 10, 12.

Daraufhin wird die so gebildete Schweißnaht in die Bürststation 39 versetzt.

Es folgt anschließend ein Bürsten der Schweißnaht von oben und unten.

Bei der dargestellten Ausführungsform erfolgt auch noch ein Lochen. Dies ist aber nicht erforderlich.

Daraufhin wird das Schlechtblech 5 durch Einschalten des Antriebes des Schlechtblechhaspels 4 auf den Schlechtblechhaspel 4 aufgewickelt.

### II. Wechsel von Umwickeln Abhaspel 1 nach Inspektions- bzw. Schlechtblechhaspel 4 zu Umwickeln Abhaspel 1 nach Gutblechhaspel 3:

Durch ständige Qualitätskontrolle des Blechbandes 2 wird festgestellt, wann wieder ein guter Blechbereich auftritt, der den Qualitätsnormen entspricht. Dann wird die erforderliche Trennstelle schlecht/gut in der Schweißmaschine positioniert.

Die Klemmbacken 10, 12 an der Einlaufseite und 9, 11 an der Auslaufseite werden durch entsprechende Druckmittelbeaufschlagung ihrer Kolben-Zylinder-Einheit geschlossen.

Anschließend wird der Trennkopf 137 der Laserstrahlschweißvorrichtung aktiviert und das Blechband 2 an dieser Stelle durchtrennt.

Daraufhin wird die Spannbrücke 14 mit den Klemmbacken 10 und 12 der damit zusammenhängenden anderen Vorrichtungsteile entgegen der Durchlaufrichtung A zwecks Schlaufenbildung 86 verfahren.

Das Schlechtblech an der Auslaufseite wird in Durchlaufrichtung A aus dem Störbereich gefahren, bis es die Blechweiche 24 passiert hat.

Daraufhin wird die Kolben-Zylinder-Einheit 25 so beaufschlagt, daß sich die Blechweiche 24 schließt, also in Richtung C geschwenkt wird und nunmehr zum Einspeisen des Gutbleches 6 bereit ist.

Daraufhin wird das Gutblechende 148 entgegen der Durchlaufrichtung A in die Laserstation eingespeist. Bei einem Ausführungsbeispiel ist hierzu die Zurücklegung eines Weges von 6 m mit einer Geschwindigkeit von 0,5 m/s und maximal 100 mm Blechüberstand zum Fokus in Richtung auf die Klemmbacken 10, 12 gegeben.

Daraufhin werden die Klemmbacken 9, 11 an der Auslaufseite durch entsprechende Druckmittelbeaufschlagung der Kolben-Zylinder-Einheit 146 geschlossen. Anschließend erfolgt das Laserschneiden. Dabei erfolgt wiederum über die Sensoren ein Abgleich des Seitenvergleiches an der Einlaufseite gemäß Signal von der Laserachse. Dies kann über mindestens einen Sensor oder mehrere Sensoren geschehen, während der Laser die Bandbreite bestreicht. Der Weg hierbei wird an einen Inkrementalgeber weitergegeben, der dann über den Spindeltrieb 92 einen etwaigen Seitenvergleich paßgenau ausgleicht.

Anschließend wird die Blechunterstützung an der Anlaufseite abgesenkt.

Es erfolgt dann der Fügehub der Bleche Einlauf/Auslauf, wobei der Spindeltrieb 92 das Blechende gegen das in den Klemmbacken 9, 11 festgeklemmte Blechende verschiebt. Der Luftzylinder 96 wirkt hierbei als Feder. Die Schlaufe 86 wird dabei beseitigt. Die Antriebe für die beiden Tische 77 und 78 werden in Gang gesetzt, um die Tische in ihre obere Stellung zu schwenken.

Es folgt wiederum das Einschwenken der Unterkupferleiste 107.

Daraufhin wird der Schweißkopf 128 der Laserstrahlschweißvorrichtung in Betrieb genommen und die beiden Blechenden miteinander verschweißt.

Es folgt das Öffnen der Klemmbacken 9 und 11 sowie 10 und 12 und eine an der Auslauf- und Einlaufseite entsprechende Beaufschlagung der zugeordneten Kolben-Zylinder-Einheiten.

Die gebildete Schweißnaht wird in die Bürststation 39 versetzt.

Anschließend erfolgt das Bürsten der Schweißnaht von oben und unten.

Gegebenenfalls folgt noch ein Lochen in der Lochstation 38, was aber nicht erforderlich ist.

### III. Verbinden von Coilende mit Coilanfang:

Ist der Abhaspel 1 abgespult, dann muß hier ein neuer Blechwickel eingebracht werden, der dann wieder auf den Gutblechhaspel 3 aufgewickelt wird, bis ein Schlechtblech 5 auf den Inspektionshaspel 4 auszuschleusen ist.

Die erfindungsgemäße Verfahrensweise ermöglicht es auch, nach dem Abhaspeln von Blechmaterial von dem Abhaspel 1, dort einen neuen Haspel zu positionieren und dessen Blechband 2 an das vorlaufende Gutblech 6 anzuschweißen.

Zunächst wird das Blechende des neuen Coils, das auf den Abhaspel 1 aufgebracht worden ist, in der Laserschweißmaschine positioniert. Die Positionstoleranz kann z. B. maximal 100 mm betragen.

Anschließend werden die Blechenden des Gutbleches 6 und des Blechbandes 2 durch die Klemmbacken 9, 11 bzw. 10, 12 gespannt.

Daraufhin wird auf der Auslaufseite die Spannbrücke 13 in Durchlaufrichtung A um ein begrenztes Maß zur Bildung der Schlaufe 85 verfahren, z. B. um 150 mm.

Daraufhin wird der Blechanfang des neuen Blechbandes von dem Abhaspel 1 in die Schweißmaschine eingespeist. Die Positionstoleranz kann z. B. maximal 100 mm betragen.

Daraufhin wird die Blechunterstützung zum Trennen der Auslaufseite, also zum Abtrennen des aus den Klemmbacken 9, 11 hervorragenden Blechrandstreifens, angehoben.

Daraufhin werden die Klemmbacken 10, 12 an der Einlaufseite gespannt.

Im Anschluß daran schneidet der Laser auf der Einlaufseite den Blechstreifen ebenfalls ab.

Die Blechunterstützung an der Auslaufseite wird abgesenkt und der Randstreifen über den Kanal 114 in die Transportvorrichtung 113 abtransportiert.

Daraufhin werden beide Spannbrücken 13 und 14 entgegen der Durchlaufrichtung A verfahren, was bewirkt, daß auf der Auslaufseite die Schlaufe 85 verschwindet und auf der Einlaufseite die Schlaufe 86 nach Absenken der Tische 77 und 78 gebildet wird.

Die beiden Spannbrücken können jeweils um 150 mm hierbei entgegen der Durchlaufrichtung A verfahren werden.

Anschließend wird die Blechunterstützung an der Auslaufseite angehoben. Es erfolgt das Abschneiden des aus den Klemmbacken 9, 11 hervorstehenden Blechrandstreifens durch den Schneidkopf 137 des Lasers.

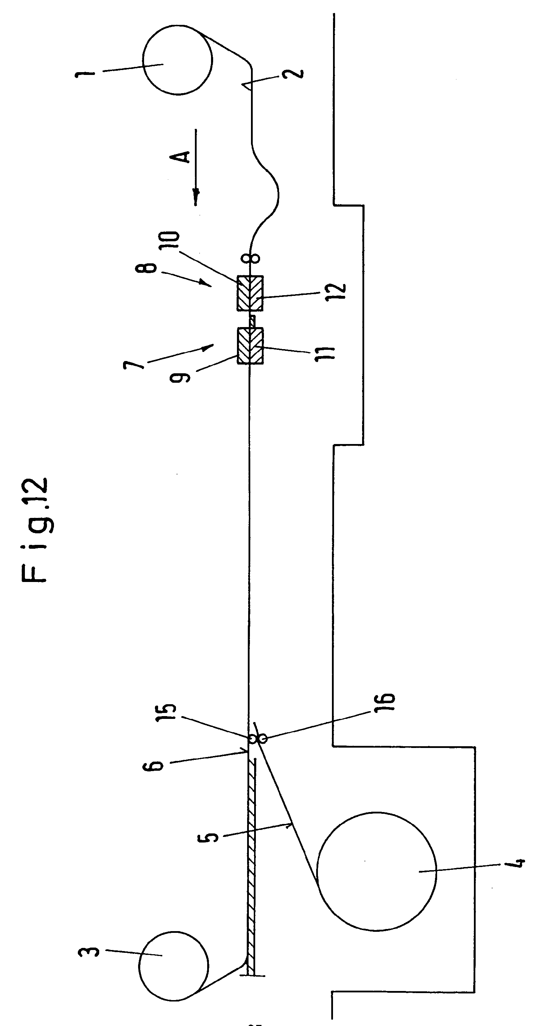

Daraufhin wird die Blechunterstützung an der Auslaufseite wieder abgesenkt, der Blechstreifen über den Kanal 114 zu der Transportvorrichtung 112 abtransportiert (Fig. 12).

Schließlich werden die beiden Bleche 2 und 6 gefügt, wozu die Spannbrücke 14 einen Fügehub in Durchlaufrichtung A ausführt von etwa 150 mm.

Die Unterkupferleiste 107 wird eingeschwenkt.

Durch den Laser werden die beiden Blechbänder 2 und 6 miteinander verschweißt.

Anschließend werden die Klemmbacken 9, 11 sowie 10, 12 geöffnet und die gebildete Schweißnaht in die Bürststation 39 versetzt und dort beidseitig gebürstet.

Daran schließt sich ggf. ein Lochen in der Lochstation 38 an, was aber auch entfallen kann.

Im Anschluß daran wird durch Antrieb des Gutblechhaspels 3 das Blechband von dem Abhaspel 1 abgezogen.

Bei allen Verfahrensweisen kann das Schlechtblechcoil auch entfallen, d. h. das Verfahren und die Vorrichtung nur mit einem Abhaspel 1 und einem Gutblechhaspel 3 betrieben werden. Die Erfindung ist somit nicht darauf beschränkt, daß unbedingt drei Haspel - Abhaspel 1, Gutblechhaspel 3 und Schlechtblechhaspel 4 - vorgesehen sind.

## Patentansprüche

1. Verfahren zum Aneinanderschweißen von unterschiedlich dicken oder gleich dicken Stahlblechen in der Größenordnung von 0,18 mm bis 8 mm durch Laserschweißen im Durchlaufverfahren, wobei
a) die Blechbahnenden sowohl vor dem endseitigen Querbeschneiden durch einen Laserstrahl als auch vor dem Aneinanderschweißen durch einen Laserstrahl in Durchlaufrichtung (A) und/oder entgegengesetzt zur Durchlaufrichtung (A) als auch mindestens noch in einer anderen Richtung dazu motorisch steuerbar sind und anschließend fluchtend zueinander fixiert und daraufhin stumpf aneinandergeschweißt werden;
b) nach dem endseitigen Beschneiden eines der miteinander zu verschweißenden Blechbahnenden dieses Blechbahnende örtlich fixiert wird, während nur das andere Blechbahnende in bezug auf das fixierte Blechbahnende sowohl in Richtung auf diese Blechbahnende als auch seitlich und in Winkeln dazu zur Erzielung einer exakten fluchtenden Ausrichtung der Blechbahnenden zueinander gesteuert wird;
c) der Fügehub des einen Blechbahnendes bis zum Anstoßen an das zuvor fixierte Blechbahnende durchgeführt wird und die dabei auftretenden Stoßbeanspruchungen durch eine steuerbare Federkraft - pneumatisch, ölhydraulisch oder mechanisch - innerhalb vorgegebener Toleranzen ausgeglichen werden.

2. Verfahren nach Anspruch 1 **dadurch gekennzeichnet,** daß immer nur das vorlaufende Blechbahnende nach seinem endrandseitigen Beschneiden durch einen Laserstrahl fixiert wird, während wird, während das nachlaufende Blechbahnende über den Fügehub und gesteuerte Quer- und/oder Winkelbewegungen in bezug auf dieses vorlaufende Blechbahnende abgeglichen und zugestellt wird.

3. Verfahren nach Anspruch 1 oder 2, **dadurch gekennzeichnet**, daß beide aneinander zu schweißende Blechbahnenden getrennt aufeinander zubewegt werden und durch Spaltmessung sowohl quer als auch ggf. um wenigstens jeweils eine, orthogonal zur Bahnoberfläche verlaufende Schwenkachse zum Ausgleich eines Seitenversatzes paßgenau gegeneinander gebracht werden.

4. Verfahren nach einem der Ansprüche 1 bis 3 **dadurch gekennzeichnet,** daß beim Abschneiden des endrandseitigen Blechstreifens mindestens eines der Bahnenden über wenigstens einen Sensor und/oder Inkrementalgeber die Blechbreite bestimmt wird und daß diese Werte zur Steuerung des anderen Blechbahnendes verwendet werden, derart, daß dieses genau in Flucht mit dem anderen Blechbahnende vor dem Anschweißen durch die Laserstrahlschweißvorrichtung gesteuert wird.

5. Verfahren nach Anspruch 1, **dadurch gekennzeichnet**, daß beim Ausführen eines Fügehubes Rückstellspannungen durch das betreffende Blechband (2, 6) gesteuert kompensiert werden.

6. Verfahren nach Anspruch 1, **dadurch gekennzeichnet**, daß der Laser beim Trennen und/oder Schweißen in zwei senkrecht aufeinander stehende Ebenen verfahrbar ist, daß die Klemmacken zum Ausführen eines Fügehubes gegeneinander gefahren werden und daß der Laser auf die Schweißnahtmitte zugestellt wird.

7. Verfahren nach Anspruch 1, **dadurch gekennzeichnet**, daß der Laser auf einer festen Bahn geführt wird, während über einen Stellmotor und ggf. einen Inkrementalgeber eines der Blechbahnenden durch Steuerbewegungen einen Fügehub ausführt, während das andere Blechende festgehalten wird und daß die feste Bahn des Lasers als Bezugsebene für die Steuerbewegungen für die Blechbahnenden dient.

8. Verfahren nach Anspruch 1, **dadurch gekennzeichnet**, daß nach dem Ausführen des Fügehubes eine automatische Spaltvermessung zwischen den beiden miteinander zu verschweißenden Blechbahnenden durchgeführt wird und daß der Laser analog der durchgeführten Meßwerte zugestellt und/oder insbesondere geschwenkt bzw. zur Erreichung einer guten Schweißnaht entsprechend der jeweils auftretenden Blechdicken in bezug auf die Oberfläche der miteinander zu verschweißenden Bleche gekippt und/oder geschwenkt wird.

9. Verfahren nach einem der Ansprüche 1 bis 8 , wobei zum Wechseln von Umwickeln Abhaspel (1) nach Gutblechhaspel (3) zu Umwickeln Abhaspel (1) nach Inspektions- bzw. Schlechtblechhaspel (4) folgende Verfahrensschritte durchgeführt werden:
a) Die Trennstelle schlecht/gut des Blechbandes (2) wird in der Laserschweiß- bzw. Lasertrennmaschine positioniert und fixiert;
b) das Blechband (2) wird auf eng gegenüberliegenden Seiten eingespannt;
c) das Blechband (2) wird zwischen den eingespannten Stellen durch Laserschneiden getrennt;
d) die Einspannstelle auf der Einlaufseite des Blechbandes wird entgegen der Durchlaufrichtung (A) horizontal um ein begrenztes Maß verschoben und dabei auf der Einlaufseite eine vorzugsweise nach unten gerichtete Schlaufe (86) gebildet; woraufhin die Fixierung und Spannung des Blechbandendes an der Auslaufseite aufgehoben wird;
e) das Gutblech (6) an der Auslaufseite wird in Durchlaufrichtung (A) aus dem Störbereich wegtransportiert;
f) von einem Schlechtblech- bzw. Inspektionshaspel (4) wird das Blechbandende in die Förderbahn (29) für das Blechband (2) eingespeist und das Ende (149) des vom Inspektionshaspel (4) kommenden Blechbandes in die Laserstation bewegt mit einem Blechüberstand zum Fokuspunkt in Richtung auf das gegenüberliegende Blechbandende;
g) daraufhin wird das Ende (149) des vom Inspektionshaspel (4) kommenden Blechbandendes von unten her flächig unterstützt;
h) woraufhin das Blechbandende an der Auslaufseite fixiert und eingespannt wird;
i) daraufhin wird das Blechband an der Auslaufseite randseitig genau durch die Laservorrichtung beschnitten;
j) während oder nach dem Beschneiden des auslautseitigen Randbereiches des Blechbandes erfolgt ein Abgleich des Seitenversatzes gemäß Signal von der Laserachse, z. B. dadurch, daß durch wenigstens einen Sensor bei der Bewegung der Laserstrahltrennvorrichtung genau die Breite des beschnittenen Blechbandendes und die Anordnung der Bezugspunkte im Raum festgehalten und diese Werte an einen Inkrementalgeber weitergegeben werden, der daraufhin über einen motorischen Antrieb das Blechbandende an der Einlaufseite seitlich und/oder auch in einem spitzen Winkel zu beiden Seiten hin derart steuert, daß die Blechbandenden genau zueinander fluchten;
k) woraufhin die Unterstützung des randseitigen Blechbandendes an der Einlaufseite aufgehoben und der abgeschnittene Blechrandstreifen entsorgt (wegtransportiert) wird;
l) daraufhin wird die Einlaufseite des Blechbandes durch einen Fügehub in Richtung auf die fixierte Auslaufseite des anderen Blechbandendes bewegt;
m) von der Unterseite wird im Schweißnahtbereich ein Unterkupfer gegen den Schweißnahtbereich eingeschwenkt;
n) darauf erfolgt durch die Laserstrahlschweißvorrichtung ein Verschweißen der beiden Blechbandenden;
o) die Fixierung und Einspannung der einlauf- und auslaufseitigen Blechbandenden wird aufgehoben;
p) die Schweißnaht wird daraufhin oben und unten, z. B. durch Bürsten, mechanisch bearbeitet und daraufhin das Schlechtblech (5) durch Ingangsetzen des Antriebes des Inspektionshaspels (4) aufgewickelt.

10. Verfahren nach einem der Ansprüche 1 bis 9 zum Wechseln von Umwickeln Abhaspel nach Inspektionshaspel zu Umwickeln Abhaspel nach Gutblechhaspel, **dadurch gekennzeichnet**,
a) daß die Trennstelle schlecht/gut des Blechbandes (2) in der Laserstrahlschweißmaschine positioniert wird;
b) daß das Blechband (2) im Bereich der Trennstelle fixiert wird;
c) daß anschließend zwischen den beiden Trennstellen durch Laserschneiden das Blechband (2) quer zur Durchlaufrichtung (A) durchtrennt wird;
d) daß die Fixierstelle an der Einlaufseite entgegengesetzt der Durchlaufrichtung (A) horizontal bewegt wird und daß gleichzeitig oder danach an der Auslaufseite die Fixierung des Blechbandes (2) aufgehoben wird;
e) daß das Schlechtblech (5) an der Auslaufseite in Durchlaufrichtung (A) aus dem Störbereich wegtransportiert wird;
f) daß nach dem Abtransportieren des Schlechtbleches (5) auf den Inspektionshaspel (4) das Gutblech (6) auf dem Gutblechhaspel (3) entgegengesetzt zur Förderrichtung (A) in die Laserstation transportiert wird;
g) daß daraufhin das Gutblech (6) an seinem Ende in der Laserstation an der Auslaufseite fixiert wird;
h) daß das Gutblech (6) randseitig durch einen Laserstrahl abgetrennt wird und daß gleichzeitig oder danach das gegenüberliegende Blechbandende auf der Einlaufseite hinsichtlich eines etwaigen Seitenversatzes gemäß Signal von der Laserachse abgeglichen wird, z. B. dadurch, daß durch wenigstens einen Sensor bei der Bewegung der Laserstrahltrennvorrichtung genau die Breite des beschnittenen Blechbandendes und die Anordnung der Bezugspunkte im Raum festgehalten und diese Werte an einen Inkrementalgeber weitergegeben werden, der daraufhin das Blechbandende an der Einlaufseite seitlich und/oder auch in einem spitzen Winkel zu beiden hin derart steuert, daß die Blechbandenden genau zueinander fluchten;
i) daß daraufhin eine Blechunterstützung an der Einlaufseite aufgehoben und der abgetrennte Blechstreifen entsorgt (wegtransportiert) wird;
j) woraufhin das Blechband an der Einlaufseite einen Fügehub in Richtung auf das eingespannte gegenüberliegende Blechbandende durchführt;
k) woraufhin eine Unterkupferleiste gegen den Schweißnahtbereich von unten gegen die Blechbahnen geschwenkt wird;
l) und daß danach durch Laserschweißen die Blechbandenden miteinander verbunden werden;
m) woraufhin die Fixierung an der Ein- und Auslaufseite der Blechbandenden aufgehoben wird;
n) daß anschließend ein Wegtransport der Schweißnaht erfolgt und die Schweißnaht mechanisch, z. B. in einer Bürststation (39) bearbeitet wird;
o) woraufhin das Gutblech (6) auf den Gutblechhaspel (3) aufgehaspelt wird.

11. Verfahren nach einem der Ansprüche 1 bis 10 zum Verbinden von Wickelende (Coilende) mit Wickelanfang (Coilanfang), **dadurch gekennzeichnet**,
a) daß das Blechbandende des Gutblechhaspels (Gutblechcoil 3) in der Laserstrahlschweißmaschine positioniert wird;
b) daß das Blechbandende an der Auslaufseite fixiert wird;
c) woraufhin die Fixierung in Durchlaufrichtung (A) in horizontaler Richtung zwecks Bildung einer Schlaufe (86) bewegt wird;
d) daß anschließend der Blechbandanfang von dem Abhaspel (1) in die Laserstrahlschweißmaschine gebracht wird;
e) woraufhin eine Blechunterstützung an der Auslaufseite von unten her gegen das Blechbandende gebracht wird;
f) daß an der Einlaufseite das Blechband fixiert wird;
g) woraufhin durch Laserstrahl der Randüberstand an der Einlaufseite abgeschnitten wird;
h) daß beide Fixierpunkte mit beiden Blechbandenden entgegen der Durchlaufrichtung (A) horizontal bewegt werden, wobei die Blechschlaufe (86) auf der Auslaufseite beseitigt wird;
i) daß eine Blechunterstützung an der Ausläufseite gegen das Blech gebracht wird;
j) daß anschließend durch einen Laserstrahl an der Auslaufseite der Blechanfang beschnitten und der abgeschnittene Blechstreifen entsorgt (wegtransportiert) wird;
k) woraufhin die Blechunterstützung an der Auslaufseite abtransportiert wird;
l) daß daraufhin der Fixierpunkt an der Auslaufpunktseite einen Fügehub in Richtung auf das andere, fixierte Blechbandende durchführt;
m) daß Unterkupfer gegen den Schweißnahtbereich von unten gebracht wird;
n ) woraufhin durch Laserschweißen die Blechbänder miteinander verbunden werden;
o) daß anschließend die Fixierpunkte gelöst werden und die gebildete Schweißnaht mechanisch bearbeitet wird;
p) woraufhin das Blechband auf einen Gutblechhaspel (3) aufgehaspelt wird.

12. Vorrichtung zum Durchführen des Verfahrens nach einem der Ansprüche 1 bis 11, mit einer Laserstrahlschweiß- und -Trennvorrichtung (102), einer Förderbahn zum Fördern von Blechbahnen sowie mindestens einem motorisch angetriebenen Abhaspel (1) und wenigstens einem motorisch angetriebenen weiteren Haspel (3), auf den das Blechband nach dem Aneinanderschweißen von Blechbahnenden aufhaspelbar ist, wobei
a) vor und nach der Laserstrahlschweiß- und -Trennvorrichtung Teile der Förderbahn (45, 53 sowie 77, 78) nach unten zwecks Bildung von Blechschlaufen (85 bzw. 86) abklappbar sind;
b) vor und nach der Laserstrahlschweiß- und - Trennvorrichtung jeweils eine Spannbrücke (13, 14) angeordnet ist und jeder dieser Spannbrücken (13, 14) jeweils ein motorisch auf- und zusteuerbares Klemmbackenpaar (9, 11 bzw. 10, 12) zugeordnet ist;
c) wenigsten eine der Spannbrücken mit dem Klemmbackenpaar (z. B. 10, 12), vorzugsweise indessen beide Spannbrücken (13, 14), in Förderrichtung (A) und entgegengesetzt zur Förderrichtung (A), horizontal motorisch beweglich angeordnet sind;
d) wenigstens eines der Klemmbackenpaare (z. B. 10, 12) außerdem in horizontaler Ebene sowohl orthogonal zur Durchlaufrichtung (A) als auch um eine senkrechte Schwenkachse (101) um ein begrenztes Maß motorisch steuerbar ist;
e) der Laservorrichtung mindestens ein Sensor zur Feststellung der Blechbreite bzw. der Bezugspunkte für die Seitenbegrenzung des Blechbandendes zugeordnet ist und daß diese Werte an einen Inkrementalgeber aufgebbar sind, der den Fügehub des zwischen den beweglichen Klemmbacken (10, 12) eingeklemmten Blechbahnendes (2) mindestens seitlich und/oder in einem spitzen Winkel in bezug auf eine orthogonal zur Bandoberfläche verlaufende Schwenkachse (101) steuert;
f) der Laserstrahlschweiß- und -Trennvorrichtung mindestens eine mechanische Bearbeitungsstation (39) zur beidseitigen Bearbeitung der Laserschweißnaht zugeordnet ist.

13. Vorrichtung nach Anspruch 12, **dadurch gekennzeichnet,** daß unterhalb der Blechbahn jedem Klemmbackenpaar (9, 11 bzw. 10, 12) je eine Blechunterstützung und je eine Fördervorrichtung oder dgl. (112 bzw. 113) zum Ausschleusen oder Abfördern der durch die Laserstrahlschweiß- und - Trennvorrichtung abgeschnittenen Blechbandstreifen zugeordnet ist, wobei diese Blechunterstützung orthogonal zur Blechbahnunterseite absenkbar und/oder abklappbar ausgebildet ist und dabei den jeweils auf ihr befindlichen Blechstreifen in einen Förderkanal (114 bzw. 115) abwirft, von wo aus die betreffenden Blechstreifen der Transportvorrichtung (112 bzw. 113) zuführbar sind.

14. Vorrichtung nach Anspruch 12 oder 13, **dadurch gekennzeichnet**, daß unterhalb der Blechbahn eine motorisch bewegliche, gegen den Schweißnahtunterbereich einschwenkbare Unterkupferleiste (107) angeordnet ist.

15. Vorrichtung nach einem der Anspruche 12 bis 14, **dadurch gekennzeichnet**, daß eine durch die vom Inkrementalgeber und/oder dem Sensor vorgegebenen Werte steuerbare Spannbrücke über ein Gehäuse (100) um eine vertikale Drehachse (101) gelagert ist und daß dieses Gehäuse (100) mit einem Luftzylinder (96) gekuppelt ist, dessen Längsachse parallel zur Durchlaufrichtung (A) verläuft und beim Fügehub der Spannbrücke diese mit allen beweglichen Teilen abfedert und daß unterhalb des Luftzylinders (96) ein Spindeltrieb (92) mit parallel zur Durchlaufrichtung (A) verlaufender Längsachse (95) angeordnet ist, der die Spannbrücke (14), das Gehäuse (100) und den Luftzylinder (96) horizontal in Durchlaufrichtung (A) der Blechbahn und entgegengesetzt dazu motorisch verstellt, und daß die gesamte Einheit aus z. B. der Spannbrücke (14), Klemmbackenpaar (10, 12), Gehäuse (100), Luftzylinder (96) und Spindeltrieb (92) auf Führungsleisten (88, 89) gelagert ist und daß die so gebildete Schlitteneinheit motorisch, z. B. über einen Spindeltrieb (91), quer zur Durchlaufrichtung (A) sowie parallel zu dieser nach beiden Seiten hin verstellbar ist.

16. Vorrichtung nach einem der Ansprüche 12 bis 15, **dadurch gekennzeichnet**, daß in der Förderbahn eine Blechweiche (24) angeordnet ist, die motorisch, z. B. durch eine Kolben-Zylinder-Einheit (25), in vertikaler Ebene auf- und abschwenkbar ist und die die Umstellung von der Förderrichtung zum Gutblechhaspel (3) oder zu einem Inspektionshaspel (4) unterhalb der Förderbahn ermöglicht.

17. Vorrichtung nach einem der Ansprüche 12 bis 16, **dadurch gekennzeichnet**, daß der Laserstrahlschweiß- und -Trennvorrichtung eine Bürststation (39) nachgeordnet ist, die oberhalb und unterhalb der Förderbahn auf die Schweißnaht einwirkende, motorisch angetriebene Bürsten aufweist, und daß der Laserstrahlschweiß- und -Trennvorrichtung ein Rollenpaar vorgeschaltet ist, durch das die Blechbahn hindurchläuft, wobei dem aus einer starren und einer gefederten Rolle bestehendem Rollenpaar ein Impulsgeber zugeordnet ist, über den sich die in der nachgeschalteten Laserstrahlschweißvorrichtung gebildete Schweißnaht genau zentrisch zu den Bürsten transportieren läßt.

18. Vorrichtung nach Anspruch 12, **dadurch gekennzeichnet**, daß vor und/oder nach der Laserstrahlschweiß- und -Trennvorrichtung seitliche Führungsvorrichtungen für das Blechband (2) angeordnet sind, die auf unterschiedliche Blechbahnbreiten einstellbar sind.

19. Vorrichtung nach einem der Ansprüche 12 bis 18 **dadurch gekennzeichnet**, daß der Kopf (137) der Laserstrahlschweißvorrichtung und der Kopf der Laserstrahltrennvorrichtung (132) an einem Wagen angeordnet sind, der an einem Portal geführt ist, das die Blechbahn übergreift und an dem die Laserstrahlschweiß- und -Trennvorrichtung mindestens parallel und orthogonal zur Durchlaufrichtung (A), vorzugsweise aber auch senkrecht zu dieser Bewegungsebene, motorisch verstellbar ausgebildet sind.

20. Vorrichtung nach Anspruch 19, **dadurch gekennzeichnet**, daß der Kopf (137) der Laserstrahlschweißvorrichtung um eine vertikale Achse drehbar und/oder von einer vertikal zur Blechbahnoberfläche verlaufenden Achse ausgehend zu mindestens zwei entgegengesetzten Richtungen um einen spitzen Winkel schwenkbeweglich angeordnet ist.

## Claims

1. Continuous laser welding method for welding metal strips having the same or different thickness, in the range from 0.18 mm to 8 mm, whereby
a) motor-actuated control of the ends of the metal strips is possible in the feed direction (A) and/or counter to the feed direction and in at least one additional direction, both prior to transverse cutting of the ends via a laser beam and prior to welding together of the metal strips via a laser beam, and whereby the metal strips are subsequently aligned and butt-welded together;
b) after one of the ends of the metal strip which are to be welded together has been cut, the position of this end is fixed, while the position of the other end of the metal strip in relation to the fixed end of the metal is controlled both in the direction of the fixed end and laterally and at angles to the fixed end, in order to attain exact alignment of the ends of the metal strip;
c) the joining stroke which is necessary to move the other end of the metal strip until it abuts the previously fixed end of the metal strip is performed, and the resultant impact force is compensated by a controllable source of spring energy - pneumatic, oil-hydraulic or mechanical -within specified tolerances.

2. Method in accordance with claim 1, **characterised in that** in each instance only the forward end of the metal strip is fixed in position after its end has been cut by a laser beam, while the rear end of the metal strip is aligned with the forward end of the metal strip and moved into position against this end via the joining stroke and controlled transverse and/or angular movements.

3. Method in accordance with claim 1 or 2, **characterised in that** the two ends of the metal strip which are to be welded together are moved towards one another separately and are brought together in exact alignment via gap measurement both in transverse direction and, if necessary, around at least one swivel axis running orthogonally to the surface of the metal strip, in order to compensate any lateral displacement.

4. Method in accordance with one of claims 1 to 4, **characterised in that** when one end at least of the metal strip is cut the width of the metal strip is determined via at least one sensor and/or incremental transducer and the measured values are employed to control movement of the other end of the metal strip in such a manner as to align this other end precisely with the fixed end, prior to welding by the laser welding device.

5. Method in accordance with claim 1, **characterised in that** the restoring strain which occurs during execution of the joining stroke is compensated by the metal strip concerned (2, 6) under controlled conditions.

6. Method in accordance with claim 1, **characterised in that** during the cutting and/or welding process the laser can be moved in two planes located vertically one above the other, that the clamping jaws are moved together in order to execute a joining stroke, and that the laser is conveyed to the middle of the weld seam.

7. Method in accordance with claim 1, **characterised in that** the laser is guided along a fixed path, while one of the ends of the metal strip carries out a joining stroke via control movements activated via an actuating motor and possibly an incremental transducer, while the other end of the metal strip is held in a fixed position, and that the fixed path of the laser serves as a reference plane for the control movements for the ends of the metal strip.

8. Method in accordance with claim 1, **characterised in that** after execution of the joining stroke the gap between the two ends of the metal strip which are to be welded together is measured, and that the laser is moved forward and/or in particular turned or, in order to attain a good weld seam in accordance with the metal strip thicknesses concerned, is tilted and/or turned in relation to the surfaces of the metal strips which are to be welded together.

9. Method in accordance with one of claims 1 to 8, whereby the following procedural steps are carried out in order to change from unwinding from the unwinding reel (1) to the reel for good metal strip (3) to unwinding from the unwinding reel (1) to the inspection or reject metal reel (4):
a) the point of separation between good and reject metal strip (2) is positioned and fixed in the laser welding and/or laser cutting machine;
b) the metal strip (2) is clamped on two closely facing sides;
c) the metal strip (2) is cut via laser cutting between the clamped points;
d) the clamping point on the incoming side of the metal strip is horizontally displaced by a limited measure counter to the feed direction (A), thereby forming an expediently downward-facing loop (86) on the incoming side, whereupon the fixation and clamping of the end of the metal strip are released on the outlet side;
e) the good metal strip (6) on the outlet side is transported out of the problem area in the feed direction (A);
f) the end of the metal strip is fed from a reject metal and/or inspection reel (4) into the feed path (29) for the metal strip (2), and the end (149) of the metal strip coming from the inspection reel (4) is moved into the laser station and projects towards the focal point in the direction facing the opposite end of the metal strip;
g) whereupon the end (149) of the metal strip coming from the inspection reel (4) is provided with support extending flatly across its width from below;
h) whereupon the end of the metal strip on the outlet side is fixed and clamped;
i) whereupon the end edge of the metal strip on the outlet side is cut precisely by the laser device;
j) during or after cutting of the edge of the metal strip on the outlet side, lateral displacement is compensated in accordance with the signal from the laser axis, this being carried out, for example, by at least one sensor determining the precise width of the cut end of the metal strip when the laser cutting device moves and recording the configuration of the reference points in space, and subsequently transmitting these values to an incremental transducer which, in turn, activates a motor drive to effect controlled movement of the end of the metal strip on the inlet side in sideways direction and/or at an acute angle to both sides, so as to ensure that the ends of the metal strip are precisely aligned;
k) whereupon the support for the end of the metal strip on the inlet side is removed and the edge strip of metal which has been cut off is disposed of (transported away);
l) whereupon the inlet side of the metal strip is moved via a joining stroke in the direction of the fixed outlet side of the other end of the metal strip;
m) a copper back-up bar is swung into position against the weld seam area from underneath;
n) the two ends of the metal strip are then welded together by the laser welding device;
o) the fixation and clamping of the ends of the metal strip on the inlet and outlet sides are released;
p) the weld seam is then mechanically treated on the top and bottom, e.g. via brushing, after which the reject metal strip (5) is coiled up by starting the drive of the inspection reel (4).

10. Method in accordance with one of claims 1 to 9, for changing from unwinding from the unwinding reel to the inspection reel to unwinding from the unwinding reel to the good metal reel, **characterised in that**
a) the separation point between the reject and good areas of the metal strip (2) is positioned in the laser welding machine;
b) the metal strip (2) is fixed in position in the area of the separation point;
c) the metal strip (2) is subsequently cut between the two separation points transversely to the feed direction (A), by means of laser cutting;
d) the fixing point on the inlet side is moved horizontally counter to the feed direction (A), and the fixation of the metal strip (2) on the outlet side is released simultaneously with or after this movement;
e) the reject metal (5) is transported out of the problem area on the outlet side in the feed direction (A);
f) after the reject metal (5) has been discharged onto the inspection reel (4), the good metal (6) is transported into the laser station on the good metal reel (3), counter to the feed direction (A);
g) the end of the good metal strip (6) is then fixed in position in the laser station on the outlet side;
h) the end edge of the good metal strip (6) is then cut off by a laser beam, and simultaneously with or after this cutting operation any lateral displacement of the opposite end of the metal strip on the inlet side is compensated in accordance with the signal from the laser axis, this being carried out, for example, by at least one sensor determining the precise width of the cut end of the metal strip when the laser cutting device moves and recording the configuration of the reference points in space, and subsequently transmitting these values to an incremental transducer which, in turn, initiates controlled movement of the end of the metal strip on the inlet side in sideways direction and/or at an acute angle to both sides, so as to ensure that the ends of the metal strip are precisely aligned;
i) whereupon a support for the metal strip on the inlet side is removed and the separated strip of metal is disposed of (transported away);
j) whereupon the metal strip on the inlet side carries out a joining stroke in the direction of the opposite, clamped end of the metal strip;
k) whereupon a copper back-up bar is swung into position against the weld seam area from underneath;
l) and the ends of the metal strip are welded together via laser welding;
m) whereupon the fixation of the inlet and outlet sides of the ends of the metal strip is released;
n) the weld seam is then transported away and the weld seam is subjected to mechanical treatment, e.g. in a brushing station (39);
o) whereupon the good metal strip (6) is coiled up on the good metal reel (3).

11. Method in accordance with one of claims 1 to 10, for joining coil end to coil beginning, **characterised in that**
a) the end of the metal strip on the good metal reel (good metal coil, 3) is positioned in the laser welding machine;
b) the end of the metal strip on the outlet side is fixed in position;
c) whereupon the fixation in feed direction (A) is moved in horizontal direction in order to form a loop (86);
d) the beginning of the metal strip is then conveyed from the unwinding reel (1) into the laser welding machine;
e) whereupon a support for the metal strip is brought into position against the end of the metal strip from underneath on the outlet side;
f) the metal strip is fixed in position on the inlet side;
g) the edge projection on the inlet side is then cut off by laser beam;
h) both fixing points are moved horizontally with both ends of the metal strip counter to the feed direction (A), thereby eliminating the loop (86) of metal strip on the outlet side;
i) a support is moved into position against the metal strip on the outlet side;
j) the beginning of the metal strip is then cut by a laser beam on the outlet side and the separated strip of metal is disposed of (transported away);
k) whereupon the support for the metal strip on the outlet side is removed;
l) the fixing point on the outlet point side then carries out a joining stroke in the direction of the other, fixed end of the metal strip;
m) a copper back-up bar is swung into position against the weld seam area from underneath;
n) whereupon the metal strips are joined together via laser welding;
o) the fixing points are then released and the weld seam which has been produced is subjected to mechanical treatment;
p) whereupon the metal strip is coiled up on a good metal reel (3).

12. Device for carrying out the method in accordance with one of claims 1 to 11, with a laser welding and cutting device (102), a conveyor line for conveying metal strips, at least one motor-driven reel (1) and at least one additional motor-driven reel (3), on which the metal strip can be coiled up after the ends of the metal strip have been welded together, whereby
a) up- and down-line of the laser welding and cutting device, parts of the conveyor line (45, 53 and 77, 78) can be folded downwards for the purpose of forming loops (85 and 86) in the metal strip;
b) one clamping yoke (13, 14) is located up-line and down-line respectively of the laser welding and cutting device, and each of these clamping yokes (13, 14) is provided with one pair of clamping jaws (9, 11 and 10, 12), which can be opened and closed by motor power;
c) at least one of the clamping yokes with its pair of clamping jaws (e.g. 10, 12), and preferably both clamping yokes (13, 14), can be moved horizontally by a motor in the feed direction (A) and counter to the feed direction (A);
d) at least one of the pairs of clamping jaws (e.g. 10, 12) can also be moved by a limited measure in a horizontal plane both orthogonally to the feed direction (A) and around a vertical swivel axis (101), via a motor;
e) the laser device is provided with at least one sensor to determine the width of the metal strip and the reference points for the side limits of the end of the metal strip, whereby the determined values can be transmitted to an incremental transducer, which controls the joining stroke of the end of the metal strip (2) clamped between the moving clamping jaws (10, 12) laterally at least and/or at an acute angle in relation to a swivel axis (101) running orthogonally to the surface of the metal strip;
f) the laser welding and cutting device is provided with at least one mechanical treatment station (39) for treating both sides of the laser weld seam.

13. Device in accordance with claim 12, **characterised in that** under the metal strip one strip support and one conveyor device or similar (112 and 113) for discharging or transporting away the strips of metal which are cut off by the laser welding and cutting device is provided for each pair of clamping jaws (9, 11 and 10, 12), whereby this strip support can be lowered orthogonally to the underside of the metal strip and/or can be swung down, thereby ejecting the strip of metal which it carries into a transport channel (114 or 115), from where the strips of metal concerned can be fed into the transport device (112 or 113).

14. Device in accordance with claim 12 or 13, **characterised in that** a motor-operated copper backup bar (107), which can be swung into position against the weld seam area, is located under the metal strip.

15. Device in accordance with one of claims 12 to 14, **characterised in that** a clamping yoke which can be controlled via the values supplied by the incremental transducer and/or the sensor is pivoted via a mounting (100) on a vertical rotary axis (101), and that this mounting (100) is connected to an air cylinder (96), whereby the longitudinal axis of this air cylinder (96) runs parallel to the feed direction (A) and the air cylinder (96) cushions the clamping yoke and all the moving parts during the joining stroke, and that a spindle-drive (92) with a longitudinal axis (95) running parallel to the feed direction (A) is located below the air cylinder (96), whereby this spindle drive (92) actuates movement of the clamping yoke (14), the mounting (100) and the air cylinder (96) horizontally in the feed direction (A) of the metal strip and counter to the feed direction (A) of the metal strip, and that the entire unit comprising, for example, clamping yoke (14), pair of clamping jaws (10, 12), mounting (100), air cylinder (96) and spindle drive (92), is mounted on guide rails (88, 89), and that the resultant sliding unit can be moved by a motor, e.g. via a spindle drive (91), towards both sides, both transversely to the feed direction (A) and parallel to the feed direction (A).

16. Device in accordance with one of claims 12 to 15, **characterised in that** the conveyor line incorporates a junction point (24) which can be moved up and down in a vertical plane by a motor, e.g. a piston-cylinder unit (25), and which enables the feed direction to be switched to the good metal reel (3) or to an inspection reel (4) under the conveyor line.

17. Device in accordance with one of claims 12 to 16, **characterised in that** a brushing station (39) is installed down-line of the laser welding and cutting device, said brushing station (39) possessing motor-driven brushes above and below the conveyor line which act on the weld seam, and that a pair of rollers is installed up-line of the laser welding and cutting device, through which pair of rollers the metal strip passes, whereby a pulse generator is assigned to this pair of rollers, which consists of one rigid and one spring-mounted roller, said pulse generator enabling the weld seam produced in the down-line laser welding device to be transported in exact central alignment with the brushes.

18. Device in accordance with claim 12, **characterised in that** side guiding devices for the metal strip (2), which are adjustable to different strip widths, are installed up- and/or down-line of the laser welding and cutting device.

19. Device in accordance with one of claims 12 to 18, **characterised in that** the head (137) of the laser welding device and the head of the laser cutting device (132) are installed on a carriage which runs on a portal, whereby this portal overlaps the metal strip and the laser welding and cutting device can be moved on this portal via motor actuation at least parallel and orthogonally to the feed direction (A), and preferably also vertically to this plane of motion.

20. Device in accordance with claim 19, **characterised in that** the head (137) of the laser welding device can be rotated around a vertical axis and/or can be turned by an acute angle in at least two opposing directions, starting from an axis running vertically to the surface of the metal strip.

## Revendications

1. Méthode d'assemblage en continu par soudage laser de bandes de tôle d'acier d'épaisseurs différentes ou identiques comprises entre 0,18 et 8 mm par soudage au laser des bandes en train de défiler,
a) les extrémités des bandes de tôles étant pilotables par moteur aussi bien avant la coupe transversale d'extrémité par un rayon laser qu'avant l'assemblage par un rayon laser dans le sens de défilement (A) et/ou dans le sens opposé à celui (A) du défilement et qu'au moins encore dans une autre direction et étant ensuite fixées dans l'alignement l'une de l'autre puis assemblées par soudage bout à bout;
b) après la coupe de l'une des extrémités des bandes de tôles à assembler par soudage ladite extrémité étant fixée localement tandis que seule l'autre extrémité de la bande de tôle étant pilotée par rapport à l'extrémité fixée de bande de tôle tant dans la direction de cette extrémité de bande de tôle que latéralement et angulairement par rapport à elle pour obtenir un alignement parfait des deux extrémités de bandes de tôle entre elles;
c) la course d'insertion de l'une des extrémités de bande de tôle jusqu'à heurter l'extrémité de bande de tôle préalablement fixée étant exécutée et les contraintes développées par le heurt étant absorbées par une force ressort pilotable pneumatique, à huile hydraulique ou mécanique dans les limites de tolérances prescrites.

2. Procédé selon revendication 1, **caractérisé en ce que** c'est toujours la seule extrémité amont de la bande de tôle qui est fixée après que sa bordure d'extrémité ait été coupée par un rayon laser tandis que l'extrémité aval de la bande de tôle est égalisée et amenée via la course d'insertion et des mouvements transversaux et/ou angulaires par rapport à cette extrémité de bande de tôle amont.

3. Procédé selon revendication 1 ou 2, **caractérisé en ce que** les deux extrémités des bandes de tôle à souder l'une contre l'autre sont approchées séparément l'une de l'autre et que, par mesure de l'interstice, elles sont amenées l'une contre l'autre en s'ajustant exactement tant transversalement que le cas échéant selon au moins un axe de basculement au tracé orthogonal par rapport à la surface de la bande pour compenser le décalage latéral.

4. Procédé selon l'une des revendications 1 à 3, **caractérisé en ce que** lors du découpage de la bordure d'extrémité d'au moins une des extrémités de bande la largeur de la tôle est déterminée par au moins un senseur et/ou un générateur d'impulsions incrémentielles et que ces valeurs sont utilisées pour piloter l'autre extrémité de la bande de tôle de telle sorte que celle-ci soit amenée exactement dans l'alignement de l'autre extrémité de bande de tôle avant le soudage par le dispositif de soudage au rayon laser.

5. Procédé selon revendication 1, **caractérisé en ce que** lors de l'exécution d'une course d'insertion la compensation des tensions de rappel dans la bande de tôle concernée (2, 6) est pilotée.

6. Procédé selon revendication 1, **caractérisé en ce que** le laser, lors du découpage et/ou du soudage est mobile selon deux plans verticaux l'un par rapport à l'autre, que les mâchoires de serrage sont déplacées en direction l'une de l'autre pour exécuter une course d'insertion et que le laser est amené sur le milieu du cordon de soudure.

7. Procédé selon revendication 1, **caractérisé en ce que** le laser est guidé sur une piste fixe tandis que l'une des extrémités de bande de tôle décrit, par des mouvements pilotés, une course d'insertion via un servomoteur et le cas échéant un générateur d'impulsions incrémentielles tandis que l'autre extrémité de bande de tôle est immobilisée et que la piste fixe du laser sert de plan de référence pour les mouvement de pilotage des extrémités de bande de tôle.

8. Procédé selon revendication 1, **caractérisé en ce qu'**après exécution de la course d'insertion une mesure automatique d'interstice a lieu entre les deux extrémités des bande de tôle à souder et que le laser est amené conformément aux valeurs mesurées et/ou est pivoté en particulier respectivement est basculé et ou pivoté par rapport à la surface des tôles à assembler par soudage pour obtenir un bon cordon de soudure correspondant aux épaisseurs de tôle présentées.

9. Procédé selon l'une des revendications 1 à 8, les pas de procédé suivants étant exécutés pour passer du transfert dérouleur (1) vers enrouleur de tôle bonne (3) au transfert dérouleur (1) vers enrouleur de tôle à inspecter respectivement mauvaise (4):
a) l'endroit de séparation bon/mauvais de la bande de tôle (2) est positionné et fixé dans la machine de soudage et découpage au rayon laser;
b) la bande de tôle (2) est tendue sur deux côtés proches et se faisant face;
c) la bande de tôle (2) est découpée au laser entre les deux extrémités tendues;
d) la zone tendue du côté admission de la bande de tôle est déplacée horizontalement d'une distance limitée dans le sens opposé à celui du défilement (A) et ce faisant se forme ducôté admission une boucle (86) dirigée de préférence vers le bas; à la suite de quoi la fixation et la tension de l'extrémité de la bande de tôle côté sortie est supprimée;
e) la tôle bonne (6) située côté sortie est enlevée hors de la zone perturbatrice dans le sens du défilement (A);
f) provenant d'un dérouleur (4) de tôle mauvaise respectivement à inspecter, l'extrémité de la bande de tôle est admise dans la piste convoyeuse (29) de bande de tôle (2) et l'extrémité (149) de la bande de tôle provenant de la bobine de tôle à inspecter est déplacée dans le poste à laser avec un porte-à-faux de la tôle par rapport au point de focalisation dans la direction de l'extrémité de la bande de tôle se trouvant en face;
g) ensuite l'extrémité (149) de la bande de tôle provenant de la bobine (4) de tôle à inspecter est soutenue superficiellement par dessous;
h) ce après quoi l'extrémité de la bande de tôle est fixée contre le côté sortie et tendue;
i) ensuite la bordure marginale de la bande de tôle côté sortie est exactement découpée par le dispositif à rayon laser;
j) avant ou après le découpage de la bordure de la bande de tôle situé coté sortie a lieu une compensation du déport latéral conformément au signal de l'axe du laser, par ex. du fait que, lors du mouvement de découpage par le laser, la largeur de l'extrémité de la bande de tôle découpée et l'agencement des points de référence dans l'espace sont captées par au moins un senseur et que ces valeurs sont communiquées à un générateur d'impulsions incrémentielles lequel, via un mécanisme motorisé, pilote l'extrémité de la bande de tôle côté admission latéralement ou selon un angle aigu par rapport aux deux côtés de telle sorte que les extrémités des bandes de tôle soient exactement dans l'alignement l'une de l'autre;
k) ce après quoi est supprimé le soutènement de la bordure marginale de l'extrémité de la bande de tôle côté admission et la bande de tôle marginale découpée est éliminée (évacuée);
l) ensuite le côté admission de la bande de tôle est déplacé par une course d'insertion en direction du côté sortie immobilisé de l'autre extrémité de la bande de tôle;
m) du côté inférieur une électrode inférieure pivote dans la zone du cordon de soudure et vient s'appliquer contre ladite zone;
n) ensuite le dispositif de soudage au rayon laser réalise le soudage des deux extrémités de tôle;
o) la fixation et le tensionnement des extrémités de bande côté admission et côté sortie sont supprimés;
p) ensuite le cordon de soudure est traité mécaniquement en haut et en bas, par des brosses par ex., puis la tôle mauvaise (5) est embobinée par mise en route du mécanisme d'entraînement de l'enroueur de tôle à inspecter (4).

10. Procédé selon l'une des revendications 1 à 9, pour passer du transfert dérouleur vers enrouleur de tôle à inspecter au transfert dérouleur vers enrouleur de tôle bonne, **caractérisé en ce que**
a) l'endroit de séparation bon/mauvais de la bande de tôle (2) est positionné dans la machine de soudage au rayon laser;
b) la bande de tôle (2) est fixée dans la zone de l'endroit de séparation;
c) ensuite la bande de tôle (2) est découpée au rayon laser entre les deux zones de séparation et transversalement au sens de défilement (A);
d) l'endroit de fixation côté admission est déplacé horizontalement dans le sens opposé au sens de défilement (A) et que simultanément ou ultérieurement la fixation de la bande de tôle (2) est supprimée côté sortie;
e) la tôle mauvaise (5) côté sortie est évacuée dans le sens de défilement hors de la zone perturbatrice;
f) après l'évacuation de la tôle mauvaise (5) sur l'enrouleur d'inspection (4) la tôle bonne (6) est dévidée dérouleur (3) de tôle bonne et transportée dans le sens opposé au défilement (A) jusque dans le poste à laser;
g) ensuite là bande marginale de la tôle bonne (6) est découpée par un rayon laser et que simultanément ou ultérieurement l'extrémité opposée de la la bande de tôle est ajustée côté admission en raison d'un éventuel déport latéral conformément au signal provenant de l'axe laser, par ex. par le fait qu'au moins un senseur, pendant le mouvement du dispositif de découpage au rayon laser, capte exactement la largeur de l'extrémité de la bande de tôle découpée et l'agencement des points de référence puis transmet ces valeurs à un générateur d'impulsions incrémentielles qui ensuite pilote latéralement et/ou aussi selon un angle aigu l'extrémité de la bande de tôle côté admission par rapport à l'autre de telle sorte que les extrémités des bandes de tôle soient exactement dans l'alignement l'une de l'autre;
i) ensuite un moyen de soutènement de la tôle se soulève côté admission et la bande de tôle découpée est éliminée (évacuée);
j) ensuite la bande de tôle côté admission exécute une course d'insertion en direction de l'extrémité opposée et tendue de la bande de tôle.
k) après quoi une barre-électrode en cuivre proche de la zone de soudage pivote par-dessous pour venir s'appliquer contre les bandes de tôle;
l) et ensuite les extrémités des bandes de tôle sont assemblées par soudage au rayon laser;
m) après quoi est supprimée la fixation côté admission et sortie des bandes de tôle;
n) ensuite le cordon de soudure est évacué et ledit cordon est traité mécaniquement, par exemple dans un poste de brossage (39);
o) après quoi la tôle bonne (6) est embobinée sur l'enrouleur (3) de tôle bonne.

11. Procédé selon l'une des revendications 1 à 10 pour unir la fin d'une bobine avec le début d'une bobine, **caractérisé en ce que**
a) l'extrémité de la bande de tôle sur l'enrouleur de tôle bonne (bobine 3 de tôle bonne) est positionnée dans la machine de soudage au rayon laser;
b) l'extrémité de la bande de tôle est fixée côté sortie;
c) après quoi la fixation est déplacée horizontalement dans le sens de défilement dans le but de former une boucle (86);
d) ensuite le début de la bande de tôle étant amené par le dérouleur (1) dans la machine de soudage au rayon laser;
e) après quoi un moyen de soutènement de la tôle côté sortie se soulève pour venir s'appliquer contre l'extrémité de la bande de tôle;
f) la bande de tôle est fixée côté admission;
g) après quoi le bord de tôle en porte-à-faux est découpé au rayon laser;
h) les deux points de fixation sont déplacés avec les deux extrémités de tôle dans le sens opposé à celui du défilement (A), la boucle de tôle (86) étant ce faisant supprimée côté sortie;
i) un moyen de soutènement de la tôle est amené contre la tôle côté sortie;
j) ensuite un rayon laser côté sortie découpe le début de la tôle et que la bande de tôle découpée est éliminée (évacuée);
k) après quoi le moyen de soutènement de la tôle côté sortie est évacué;
l) ensuite le point de fixation côté sortie exécute une course d'insertion en direction de l'autre extrémité fixée de la bande de tôle;
m) l'électrode inférieure étant amenée par-dessous contre la zone du cordon de soudure;
n) après quoi les bandes de tôle sont assemblées par soudage au rayon laser;
o) ensuite les points de fixation sont défaits et le cordon de soudure formé est traité mécaniquement;
p) ensuite la bande de tôle est enroulée sur un enrouleur de tôle bonne (3).

12. Dispositif d'exécution du procédé selon l'une des revendications 1 à 11 avec un dispositif de soudage et découpage au rayon laser (102), une piste convoyeuse transportant les bandes de tôle, ainsi qu'au moins un dérouleur (1) à entraînement motorisé et au moins un autre enrouleur (3) à entraînement motorisé sur lequel la bande de tôle est enroulable après l'assemblage des bandes de tôle par soudage de leurs extrémités,
a) certaines parties de la piste convoyeuse (45, 43 et 77, 78) étant rabattables en amont et en aval du dispositif de soudage et découpage au rayon laser dans le but de former des boucles de tôle (85 resp. 86);
b) un pont tensionneur (13, 14) étant agencé en amont et en aval du dispositif de soudage et découpage au rayon laser et une paire de mâchoires de bridage à ouverture et fermeture pilotées par moteur (9, 11 resp. 10, 12) étant affectée à chacun de ces ponts tensionneurs (13, 14).
c) au moins un des ponts tensionneurs avec la paire de mâchoires de bridage (par ex. 10, 12), de préférence cependant les deux ponts tensionneurs (13, 14), étant agencés déplaçables horizontalement par moteur dans le sens de défilement (A) et dans le sens opposé à celui-ci (A).
d) au moins l'une des paires de mâchoires (par ex. 10, 12) étant pilotables par moteur sur une distance limitée sur le plan horizontal, aussi bien orthogonalement au sens de défilement (A) que selon un axe vertical pivotant (101);
e) au dispositif à rayon laser étant affecté au moins un senseur pour détecter la largeur de la tôle respectivement les points de référence pour la limitation latérale de l'extrémité de la bande de tôle et les valeurs étant transmissibles à un générateur d'impulsions incrémentielles qui commande la course d'insertion de l'extrémité de la bande de tôle (2), bridée entre les mâchoires de bridage mobiles (10, 12), au moins latéralement et/ou selon un angle aigu par rapport à un axe de pivotement (101) ayant un tracé orthogonal par rapport à la surface de la bande;
f) au dispositif de soudage et découpage au rayon laser étant affecté au moins un poste mécanique de traitement (39) permettant le traitement bilatéral du cordon de soudure laser.

13. Dispositif selon revendication 12, **caractérisé en ce que**, en-dessous des bandes de tôle, un moyen de soutènement de la tôle et un dispositif de convoyage ou assimilés (112 resp. 113) sont affectés à chaque paire de mâchoires de serrage (9, 10 resp. 10, 12) pour évacuer ou emporter les segments de bande de tôle découpés par le dispositif de soudage et découpage au rayon laser, le moyen de soutènement de la tôle étant conçu abaissable et/ou rabattable orthogonalement à la face inférieure de la tôle et ce faisant éjectant dans une canalisation convoyeuse (114 resp. 115) chaque segment de tôle se trouvant dessus, d'où les segments de tôle concernés étant acheminables au dispositif de transport (112 resp. 113).

14. Dispositif selon revendication 12 ou 13, **caractérisé en ce qu'**en dessous de la bande de tôle est disposée une barre-électrode en cuivre (107) déplaçable par moteur qui vient basculer jusque dans la zone du cordon de soudure de dessous.

15. Dispositif selon l'une des revendications 12 à 14, **caractérisée en ce qu'**un pont tensionneur pilotable par les valeurs imposées par un générateur d'impulsions incrémentielles et/ou le senseur repose sur un carter (100) en tournant autour d'un axe vertical (101) et que ledit carter (100) est couplé à un vérin pneumatique (96) dont l'axe longitudinal est parallèle au sens de défilement (A) et lors d'une course d'insertion du pont tensionneur celui-ci amortit avec toutes ses pièces mobiles et qu'en-dessous du vérin pneumatique (96) est disposé un mécanisme à broche (92) à axe longitudinal (96) parallèle au sens de défilement (A) qui déplace sous l'effet d'un moteur le pont tensionneur (14), le carter (100) et le vérin hydraulique (96) horizontalement dans le sens du défilement (A) de la bande de tôle et dans le sens opposé à celui-ci (A), et que l'unité complète composée par ex. du pont tensionneur (14), de paires de mâchoires de serrage (10, 12), au carter (100), du vérin hydraulique (96) et du mécanisme d'entraînement à broche (92) repose sur des listels de guidage (88, 89) et que l'unité à chariot ainsi formée est déplaçable dans les deux directions par moteur par ex. via un mécanisme d'entraînement à broche (91), transversalement au sens de défilement (A) ainsi que parallèlement à celui-ci (A).

16. Dispositif selon l'une des revendications 12 à 15, **caractérisé en ce qu'**un aiguillage à tôle (24) est disposé dans la piste convoyeuse et est basculable selon le plan vertical vers le haut ou vers le bas par moteur, par ex. par une unité à piston et cylindre (25) et qui permet de changer la direction de convoyage vers l'enrouleur de tôle bonne (3) ou vers un enrouleur de tôle mauvaise (4) en-dessous de la piste convoyeuse.

17. Dispositif selon l'une des revendications 12 à 16, **caractérisé en ce qu'**en aval du dispositif de soudage et découpage au rayon laser se trouve une station de brossage (3) présentant des brosses entraînées par moteur et agissant sur le cordon de soudure au-dessus et en dessous de la piste convoyeuse en ce qu'en amont du dispositif de soudage et découpage au rayon laser une paire de rouleaux est installée que traverse la bande de tôle, un générateur d'impulsions étant affecté à cette paire de rouleaux composée d'un rouleau fixe et d'un rouleau à mouvements assortis, ledit générateur d'impulsions permettant que le cordon de soudure formé par le dispositif de soudage au rayon laser situé en aval soit tranporté exactement centré jusqu'aux brosses.

18. Dispositif selon revendication 12, **caractérisé en ce qu'**en amont et/ou en aval du dispositif de soudage et découpage au rayon laser sont agencés des dispositifs de guidage latéral de la bande de tôle (2) réglables sur les différentes largeurs de bande (2).

19. Dispositif selon l'une des revendications 12 à 18, **caractérisé en ce que** la tête (137) du dispositif de soudage au rayon laser et la tête du dispositif de découpage au rayon laser (132) sont agencées contre un chariot guidé contre un portique surplombant la bande de tôle et contre lequel le dispositif de soudage et découpage au rayon laser est monté déplaçable par moteur au moins parallèlement et orthogonalement au sens de défilement (A), mais de préférence aussi verticalement à ce plan de déplacement.

20. Dispositif selon revendication 19, **caractérisé en ce que** la tête (137) du dispositif de soudage au rayon laser peut tourner autour d'un axe vertial et/ou qu'elle est agencée pour basculer, selon un angle aigu et au moins dans deux directions opposées, depuis un axe vertical par rapport à la surface de la bande de tôle.
